(19) Europäisches Patentamt
European Patent Office
Office européen des brevets

(11) **EP 4 694 483 A1**

(12) **EUROPEAN PATENT APPLICATION**
published in accordance with Art. 153(4) EPC

(43) Date of publication:
**11.02.2026 Bulletin 2026/07**

(21) Application number: **24784381.6**

(22) Date of filing: **03.04.2024**

(51) International Patent Classification (IPC):
**H04W 72/23** (2023.01)

(52) Cooperative Patent Classification (CPC):
**H04L 5/00; H04W 72/0446; H04W 72/23**

(86) International application number:
**PCT/CN2024/085926**

(87) International publication number:
**WO 2024/208299 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.04.2023 CN 202310411107**

(71) Applicant: **Huawei Technologies Co., Ltd.
Shenzhen, Guangdong 518129 (CN)**

(72) Inventors:
• **HOU, Hailong**
**Shenzhen, Guangdong 518129 (CN)**
• **GUO, Zhiheng**
**Shenzhen, Guangdong 518129 (CN)**
• **LU, Shaozhong**
**Shenzhen, Guangdong 518129 (CN)**
• **SONG, Xinghua**
**Shenzhen, Guangdong 518129 (CN)**

(74) Representative: **Isarpatent
Patent- und Rechtsanwälte Partg mbB
Friedrichstraße 31
80801 München (DE)**

(54) **COMMUNICATION METHOD AND COMMUNICATION APPARATUS**

(57) Embodiments of this application provide a communication method and a communication apparatus. The method is applied to a network device, and the method includes: sending configuration information to a terminal device, where the configuration information indicates M sounding reference signal SRS resource sets, the M SRS resource sets include X first SRS resource sets and Y second SRS resource sets, the X first SRS resource sets include at least one first SRS resource, the Y second SRS resource sets include at least one second SRS resource, a time domain resource corresponding to the at least one first SRS resource is a subband full duplex SBFD type time unit, and a time domain resource corresponding to the at least one second SRS resource is a non-SBFD type time unit; and receiving an SRS from the terminal device based on the configuration information. According to the solutions of this application, SRS transmission performance can be improved.

FIG. 6

## Description

This application claims priority to Chinese Patent Application No. 202310411107.4, filed with the China National Intellectual Property Administration on April 7, 2023 and entitled "COMMUNICATION METHOD AND COMMUNICATION APPARATUS", which is incorporated herein by reference in its entirety.

## TECHNICAL FIELD

Embodiments of this application relate to the communication field, and in particular, to a communication method and a communication apparatus.

## BACKGROUND

Currently, a sounding reference signal (sounding reference signal, SRS) is configured based on an uplink bandwidth part (uplink bandwidth part, UL BWP), that is, an SRS may be transmitted on an uplink subband. If some frequency resources in the UL BWP are configured as a downlink subband or guard band (guard band), for example, in a subband full duplex (subband full duplex, SBFD) slot/symbol, if an SRS frequency resource overlaps the downlink subband or guard band, SRS transmission is unclear, and SRS transmission is abnormal.

## SUMMARY

Embodiments of this application provide a communication method and a communication apparatus, to improve SRS transmission performance.

According to a first aspect, a communication method is provided. The method is applied to a network device, and the method includes: sending configuration information to a terminal device, where the configuration information indicates M sounding reference signal SRS resource sets, a usage of the M SRS resource sets includes one of antenna selection, codebook-based uplink transmission, non-codebook-based uplink transmission, beam management, and positioning, the M SRS resource sets include X first SRS resource sets and Y second SRS resource sets, the X first SRS resource sets include at least one first SRS resource, the Y second SRS resource sets include at least one second SRS resource, a time domain resource corresponding to the at least one first SRS resource is a subband full duplex SBFD type time unit, a time domain resource corresponding to the at least one second SRS resource is a non-SBFD type time unit, M is an integer greater than or equal to 1, and both X and Y are integers greater than or equal to 0; and receiving an SRS from the terminal device based on the configuration information.

In the solution provided in this embodiment of this application, the M SRS resource sets indicated by the configuration information from the network device to the terminal device include the X first SRS resource sets and the Y second SRS resource sets. In addition, the time domain resource corresponding to the at least one first SRS resource included in the X first SRS resource sets is the SBFD type time unit, and the time domain resource corresponding to the at least one second SRS resource included in the Y second SRS resource sets is the non-SBFD type time unit, so that the terminal device can send the SRS based on the configuration information. For example, for the at least one first SRS resource included in the X first SRS resource sets, the terminal device may send the SRS to the network device on an uplink subband in the SBFD type time unit; and for the at least one second SRS resource included in the Y second SRS resource sets, the terminal device may send the SRS to the network device in the non-SBFD type time unit. Correspondingly, the network device may receive the SRS based on the configuration information. This can improve SRS transmission performance.

With reference to the first aspect, in some possible implementations, X and Y are the same.

In this embodiment of this application, X and Y are the same. To be specific, for a specific usage (for example, one of antenna selection, codebook-based uplink transmission, non-codebook-based uplink transmission, beam management, and positioning): Quantities of first SRS resource sets and second SRS resource sets included in the M SRS resource sets indicated by the configuration information configured by the network device for the terminal device are the same. For example, both X and Y are 1, or both X and Y are 2. This configuration manner can simplify SRS resource configuration, indication, and use processes, and help reduce system processing complexity.

With reference to the first aspect, in some possible implementations, if X is greater than 1, each of the X first SRS resource sets includes a same quantity of SRS resources; or if Y is greater than 1, each of the Y second SRS resource sets includes a same quantity of SRS resources; or if M is greater than 1, each of the M SRS resource sets includes a same quantity of SRS resources.

In the solution provided in this embodiment of this application, when X is greater than 1, each of the X first SRS resource sets includes the same quantity of SRS resources; or when Y is greater than 1, each of the Y second SRS resource sets includes the same quantity of SRS resources; or the first SRS resource set and the second SRS resource set are not distinguished, and each of the M SRS resource sets includes the same quantity of SRS resources. This configuration manner can simplify SRS resource configuration, indication, and use processes, and help reduce system processing complexity.

With reference to the first aspect, in some possible implementations, the configuration information includes first indication information, and the first indication information indicates that a time domain resource corresponding to an SRS resource included in the SRS resource set is the SBFD type time unit or the non-SBFD type time unit.

In the solution provided in this embodiment of this application, the configuration information from the network device to the terminal device may include the first indication information, and the first indication information may indicate that the time domain resource corresponding to the SRS resource included in the SRS resource set is the SBFD type time unit or the non-SBFD type time unit, so that the terminal device can send the SRS based on the first indication information. This can improve SRS transmission performance.

With reference to the first aspect, in some possible implementations, the method further includes: sending an uplink scheduling grant to the terminal device, where the uplink scheduling grant includes an SRS resource indicator field, a time unit type of an SRS resource indicated by the SRS resource indicator field is the same as a time unit type of uplink transmission scheduled by the uplink scheduling grant, and the time unit type includes the SBFD type and the non-SBFD type.

Specifically, if the time unit type of the uplink transmission scheduled by the uplink scheduling grant is the SBFD type, the time unit type of the SRS resource indicated by the SRS resource indicator field is also the SBFD type, in other words, the SRS resource indicated by the SRS resource indicator field is an SRS resource in the at least one first SRS resource; or if the time unit type of the uplink transmission scheduled by the uplink scheduling grant is the non-SBFD type, the time unit type of the SRS resource indicated by the SRS resource indicator field is also the non-SBFD type, in other words, the SRS resource indicated by the SRS resource indicator field is an SRS resource in the at least one second SRS resource.

In the solution provided in this embodiment of this application, the uplink scheduling grant from the network device to the terminal device includes the SRS resource indicator field, and the time unit type of the SRS resource indicated by the SRS resource indicator field is the same as the time unit type of the uplink transmission scheduled by the uplink scheduling grant, so that after receiving the uplink scheduling grant, the terminal device can send the uplink transmission in the same manner as the foregoing SRS transmission. This can improve uplink transmission performance and improve SRS measurement efficiency.

With reference to the first aspect, in some possible implementations, the method further includes: sending an uplink scheduling grant to the terminal device, where the uplink scheduling grant includes an SRS resource set indicator field, a type of an SRS resource set indicated by the SRS resource set indicator field is the same as a time unit type of uplink transmission scheduled by the uplink scheduling grant, and the type of the SRS resource set includes a type of the first SRS resource set and a type of the second SRS resource set.

Specifically, if the time unit type of the uplink transmission scheduled by the uplink scheduling grant is the SBFD type, the type of the SRS resource set indicated by the SRS resource set indicator field is also the SBFD type, in other words, the SRS resource set indicated by the SRS resource set indicator field is an SRS resource set in the X first SRS resource sets; or if the time unit type of the uplink transmission scheduled by the uplink scheduling grant is the non-SBFD type, the type of the SRS resource set indicated by the SRS resource set indicator field is also the non-SBFD type, in other words, the SRS resource set indicated by the SRS resource set indicator field is an SRS resource set in the Y second SRS resource sets.

In the solution provided in this embodiment of this application, the uplink scheduling grant from the network device to the terminal device includes the SRS resource set indicator field, and the type of the SRS resource set indicated by the SRS resource set indicator field is the same as the time unit type of the uplink transmission scheduled by the uplink scheduling grant, so that after receiving the uplink scheduling grant, the terminal device can send the uplink transmission in a same manner as SRS transmission in the SRS resource set indicated by the SRS resource set indicator field. This can improve transmission performance of the uplink transmission.

With reference to the first aspect, in some possible implementations, the method further includes: sending an uplink scheduling grant to the terminal device, where the uplink scheduling grant includes an SRS resource set indicator field, a type of an SRS resource set indicated by the SRS resource set indicator field is determined based on a first indicator field included in the uplink scheduling grant, and the first indicator field indicates that the SRS resource set indicated by the SRS resource set indicator field is an SRS resource set in the X first SRS resource sets or an SRS resource set in the Y second SRS resource sets.

Specifically, if the first indicator field included in the uplink scheduling grant indicates that the type of the SRS resource set indicated by the SRS resource set indicator field is the SBFD type, the SRS resource set indicated by the SRS resource set indicator field is an SRS resource set in the X first SRS resource sets; or if the first indicator field included in the uplink scheduling grant indicates that the type of the SRS resource set indicated by the SRS resource set indicator field is the non-SBFD type, the SRS resource set indicated by the SRS resource set indicator field is an SRS resource set in the Y second SRS resource sets.

In the solution provided in this embodiment of this application, the uplink scheduling grant from the network device to the terminal device includes the SRS resource set indicator field, and the type of the SRS resource set indicated by the SRS resource set indicator field is determined based on the first indicator field included in the uplink scheduling grant, so that after receiving the uplink scheduling grant, the terminal device can send the uplink transmission in a same manner as SRS transmission in the SRS resource set indicated by the SRS resource set indicator field. This can improve transmission performance of the uplink transmission.

With reference to the first aspect, in some possible implementations, the method further includes: sending an uplink scheduling grant to the terminal device, where the uplink scheduling grant includes an SRS resource set indicator field, the SRS resource set indicator field indicates a type of an SRS resource set and an SRS resource set included in the indicated type of the SRS resource set, and the type of the SRS resource set includes a type of the first SRS resource set and a type of the second SRS resource set.

In the solution provided in this embodiment of this application, the uplink scheduling grant from the network device to the terminal device includes the SRS resource set indicator field, and the SRS resource set indicator field indicates the type of the SRS resource set and the SRS resource set included in the indicated type of the SRS resource set, so that after receiving the uplink scheduling grant, the terminal device can send the uplink transmission in a same manner as SRS transmission in the type of the SRS resource set indicated by the SRS resource set indicator field and in the SRS resource set included in the type of the SRS resource set. This can improve transmission performance of the uplink transmission.

With reference to the first aspect, in some possible implementations, a length of the SRS resource set indicator field is determined based on a larger value between X and Y.

In the solution provided in this embodiment of this application, the length of the SRS resource set indicator field is determined based on the larger value between X and Y. This can further improve SRS transmission performance.

With reference to the first aspect, in some possible implementations, for an SRS resource in the at least one first SRS resource and/or the at least one second SRS resource, a time unit type of a reference signal associated with the SRS resource is the same as a time unit type of the SRS resource, and the time unit type includes the SBFD type and the non-SBFD type.

In the solution provided in this embodiment of this application, for the SRS resource in the at least one first SRS resource and/or the at least one second SRS resource, the time unit type of the reference signal associated with the SRS resource is the same as the time unit type of the SRS resource, that is, an SRS transmitted on a same type of time domain resource is spatially associated with another reference signal (for example, a CSI-RS, an SSB, another SRS, or a DL-PRS). This helps enhance and improve SRS transmission performance, and also improves transmission performance of another uplink/downlink channel or signal such as a channel based on SRS transmission.

With reference to the first aspect, in some possible implementations, the reference signal includes at least one of the following:

a channel state information reference signal CSI-RS, a synchronization signal/physical broadcast channel block SSB, an SRS other than the SRS, and a downlink positioning reference signal DL PRS.

According to a second aspect, a communication method is provided. The method is applied to a terminal device, and the method includes: receiving configuration information from a network device, where the configuration information indicates M sounding reference signal SRS resource sets, a usage of the M SRS resource sets includes one of antenna selection, codebook-based uplink transmission, non-codebook-based uplink transmission, beam management, and positioning, the M SRS resource sets include X first SRS resource sets and Y second SRS resource sets, the X first SRS resource sets include at least one first SRS resource, the Y second SRS resource sets include at least one second SRS resource, a time domain resource corresponding to the at least one first SRS resource is a subband full duplex SBFD type time unit, a time domain resource corresponding to the at least one second SRS resource is a non-SBFD type time unit, M is an integer greater than or equal to 1, and both X and Y are integers greater than or equal to 0; and sending an SRS to the network device based on the configuration information.

In the solution provided in this embodiment of this application, the M SRS resource sets indicated by the configuration information from the network device and received by the terminal device include the X first SRS resource sets and the Y second SRS resource sets. In addition, the time domain resource corresponding to the at least one first SRS resource included in the X first SRS resource sets is the SBFD type time unit, and the time domain resource corresponding to the at least one second SRS resource included in the Y second SRS resource sets is the non-SBFD type time unit. Therefore, the terminal device can send the SRS based on the configuration information. For example, for the at least one first SRS resource included in the X first SRS resource sets, the terminal device may send the SRS to the network device on an uplink subband in the SBFD type time unit; and for the at least one second SRS resource included in the Y second SRS resource sets, the terminal device may send the SRS to the network device in the non-SBFD type time unit. This can improve SRS transmission performance.

With reference to the second aspect, in some possible implementations, X and Y are the same.

In this embodiment of this application, X and Y are the same. To be specific, for a specific usage (for example, one of antenna selection, codebook-based uplink transmission, non-codebook-based uplink transmission, beam management, and positioning): Quantities of first SRS resource sets and second SRS resource sets included in the M SRS resource sets indicated by the configuration information from the network device and received by the terminal device are the same. For example, both X and Y are 1, or both X and Y are 2. This configuration manner can simplify SRS resource configuration, indication, and use processes, and help reduce system processing complexity.

With reference to the second aspect, in some possible implementations, if X is greater than 1, each of the X first SRS resource sets includes a same quantity of SRS resources; or if Y is greater than 1, each of the Y second SRS resource sets includes a same quantity of SRS resources; or if M is greater than 1, each of the M SRS resource sets includes a same quantity of SRS resources.

In the solution provided in this embodiment of this application, when X is greater than 1, each of the X first SRS resource sets includes the same quantity of SRS resources; or when Y is greater than 1, each of the Y second SRS resource sets includes the same quantity of SRS resources; or the first SRS resource set and the second SRS resource set are not distinguished, and each of the M SRS resource sets includes the same quantity of SRS resources. This configuration manner can simplify SRS resource configuration, indication, and use processes, and help reduce system processing complexity.

With reference to the second aspect, in some possible implementations, the configuration information includes first indication information, and the first indication information indicates that a time domain resource corresponding to an SRS resource included in the SRS resource set is the SBFD type time unit or the non-SBFD type time unit.

In the solution provided in this embodiment of this application, the configuration information from the network device and received by the terminal device may include the first indication information, and the first indication information may indicate that the time domain resource corresponding to the SRS resource included in the SRS resource set is the SBFD type time unit or the non-SBFD type time unit, so that the terminal device can send the SRS based on the first indication information. This can improve SRS transmission performance.

With reference to the second aspect, in some possible implementations, the method further includes: receiving an uplink scheduling grant from the network device, where the uplink scheduling grant includes an SRS resource indicator field, a time unit type of an SRS resource indicated by the SRS resource indicator field is the same as a time unit type of uplink transmission scheduled by the uplink scheduling grant, and the time unit type includes the SBFD type and the non-SBFD type.

In the solution provided in this embodiment of this application, the uplink scheduling grant from the network device and received by the terminal device includes the SRS resource indicator field, and the time unit type of the SRS resource indicated by the SRS resource indicator field is the same as the time unit type of the uplink transmission scheduled by the uplink scheduling grant. After receiving the uplink scheduling grant, the terminal device can send the uplink transmission in the same manner as the foregoing SRS transmission. This can improve uplink transmission performance and improve SRS measurement efficiency.

With reference to the second aspect, in some possible implementations, the method further includes: receiving an uplink scheduling grant from the network device, where the uplink scheduling grant includes an SRS resource set indicator field, a type of an SRS resource set indicated by the SRS resource set indicator field is the same as a time unit type of uplink transmission scheduled by the uplink scheduling grant, and the type of the SRS resource set includes a type of the first SRS resource set and a type of the second SRS resource set.

In the solution provided in this embodiment of this application, the uplink scheduling grant from the network device and received by the terminal device includes the SRS resource set indicator field, and the type of the SRS resource set indicated by the SRS resource set indicator field is the same as the time unit type of the uplink transmission scheduled by the uplink scheduling grant. After receiving the uplink scheduling grant, the terminal device can send the uplink transmission in a same manner as SRS transmission in the SRS resource set indicated by the SRS resource set indicator field. This can improve transmission performance of the uplink transmission.

With reference to the second aspect, in some possible implementations, the method further includes: receiving an uplink scheduling grant from the network device, where the uplink scheduling grant includes an SRS resource set indicator field, a type of an SRS resource set indicated by the SRS resource set indicator field is determined based on a first indicator field included in the uplink scheduling grant, and the first indicator field indicates that the SRS resource set indicated by the SRS resource set indicator field is an SRS resource set in the X first SRS resource sets or an SRS resource set in the Y second SRS resource sets.

In the solution provided in this embodiment of this application, the uplink scheduling grant from the network device and received by the terminal device includes the SRS resource set indicator field, and the type of the SRS resource set indicated by the SRS resource set indicator field is determined based on the first indicator field included in the uplink scheduling grant. After receiving the uplink scheduling grant, the terminal device can send the uplink transmission in a same manner as SRS transmission in the SRS resource set indicated by the SRS resource set indicator field. This can improve transmission performance of the uplink transmission.

With reference to the second aspect, in some possible implementations, the method further includes: receiving an uplink scheduling grant from the network device, where the uplink scheduling grant includes an SRS resource set indicator field, the SRS resource set indicator field indicates a type of an SRS resource set and an SRS resource set included in the indicated type of the SRS resource set, and the type of the SRS resource set includes a type of the first SRS resource set and a type of the second SRS resource set.

In the solution provided in this embodiment of this application, the uplink scheduling grant from the terminal device and received by the terminal device includes the SRS resource set indicator field, and the SRS resource set indicator field indicates the type of the SRS resource set and the SRS resource set included in the indicated type of the SRS resource set. After receiving the uplink scheduling grant, the terminal device can send the uplink transmission in a same manner as SRS transmission in the type of the SRS resource set indicated by the SRS resource set indicator field and in the SRS resource set included in the type of the SRS resource set. This can improve transmission performance of the uplink transmission.

With reference to the second aspect, in some possible implementations, a length of the SRS resource set indicator field is determined based on a larger value between X and Y.

In the solution provided in this embodiment of this application, the length of the SRS resource set indicator field is determined based on the larger value between X and Y. This can further improve SRS transmission performance.

With reference to the second aspect, in some possible implementations, for an SRS resource in the at least one first SRS resource and/or the at least one second SRS resource, a time unit type of a reference signal associated with the SRS resource is the same as a time unit type of the SRS resource, and the time unit type includes the SBFD type and the non-SBFD type.

In the solution provided in this embodiment of this application, for the SRS resource in the at least one first SRS resource and/or the at least one second SRS resource, the time unit type of the reference signal associated with the SRS resource is the same as the time unit type of the SRS resource, that is, an SRS transmitted on a same type of time domain resource is spatially associated with another reference signal (for example, a CSI-RS, an SSB, another SRS, or a DL-PRS). This helps enhance and improve SRS transmission performance, and also improves transmission performance of another uplink/downlink channel or signal such as a channel based on SRS transmission.

With reference to the second aspect, in some possible implementations, the reference signal includes at least one of the following:

a channel state information reference signal CSI-RS, a synchronization signal/physical broadcast channel block SSB, an SRS other than the SRS, and a downlink positioning reference signal DL PRS.

According to a third aspect, a communication method is provided. The method is applied to a network device, and the method includes: sending an uplink scheduling grant to a terminal device, where the uplink scheduling grant includes a sounding reference signal SRS resource indicator field, a time unit type of an SRS resource indicated by the SRS resource indicator field is the same as a time unit type of uplink transmission scheduled by the uplink scheduling grant, and the time unit type includes a subband full duplex SBFD type and a non-SBFD type; and receiving the uplink transmission from the terminal device based on the SRS resource indicator field.

In the solution provided in this embodiment of this application, the uplink scheduling grant from the network device to the terminal device includes the SRS resource indicator field, and the time unit type of the SRS resource indicated by the SRS resource indicator field is the same as the time unit type of the uplink transmission scheduled by the uplink scheduling grant, so that after receiving the uplink scheduling grant, the terminal device can send the uplink transmission in the same manner as the foregoing SRS transmission. This can ensure that link quality of the uplink transmission is similar to that of the associated SRS, improve transmission performance of the uplink transmission, and improve SRS measurement efficiency.

According to a fourth aspect, a communication method is provided. The method is applied to a terminal device, and the method includes: receiving an uplink scheduling grant from a network device, where the uplink scheduling grant includes a sounding reference signal SRS resource indicator field, a time unit type of an SRS resource indicated by the SRS resource indicator field is the same as a time unit type of uplink transmission scheduled by the uplink scheduling grant, and the time unit type includes a subband full duplex SBFD type and a non-SBFD type; and sending the uplink transmission to the network device based on the SRS resource indicator field.

In the solution provided in this embodiment of this application, the uplink scheduling grant from the network device and received by the terminal device includes the SRS resource indicator field, and the time unit type of the SRS resource indicated by the SRS resource indicator field is the same as the time unit type of the uplink transmission scheduled by the uplink scheduling grant. After receiving the uplink scheduling grant, the terminal device can send the uplink transmission in the same manner as the foregoing SRS transmission. This can ensure that link quality of the uplink transmission is similar to that of the associated SRS, improve transmission performance of the uplink transmission, and improve SRS measurement efficiency.

According to a fifth aspect, a communication method is provided. The method is applied to a network device, and the method includes: sending second indication information to a terminal device, where a time unit type that is indicated by the second indication information and that is of a reference signal associated with an SRS resource is the same as a type time unit of the SRS resource, and the time unit type includes a subband full duplex SBFD type and a non-SBFD type; and receiving, from the terminal device based on the second indication information, an SRS corresponding to the SRS resource.

In the solution provided in this embodiment of this application, the time unit type that is indicated by the second indication information from the network device to the terminal device and that is of the reference signal associated with the SRS resource is the same as the type time unit of the SRS resource, that is, spatial association is performed between an SRS transmitted on a time domain resource of a same type and a reference signal associated with the SRS resource, and spatial association can be performed on reference signals with same or similar link quality. This helps enhance and improve SRS transmission performance, and further, this can also improve transmission performance of a channel or a signal based on the SRS transmission.

With reference to the fifth aspect, in some possible implementations, the reference signal includes at least one of the following: a channel state information reference signal CSI-RS, a synchronization signal/physical broadcast channel block SSB, an SRS other than the SRS, and a downlink positioning reference signal DL PRS.

According to a sixth aspect, a communication method is provided. The method is applied to a terminal device, and the method includes: receiving second indication information from the terminal, where a time unit type that is indicated by the second indication information and that is of a reference signal associated with a sounding reference signal SRS resource is the same as a type time unit of the SRS resource, and the time unit type includes a subband full duplex SBFD type and a non-SBFD type; and sending, to a network device based on the second indication information, an SRS corresponding to the SRS resource.

In the solution provided in this embodiment of this application, the time unit type that is indicated by the second indication information from the network device and received by the terminal device and that is of the reference signal associated with the SRS resource is the same as the type time unit of the SRS resource, that is, spatial association is performed between an SRS transmitted on a time domain resource of a same type and a reference signal associated with the SRS resource, and spatial association can be performed on reference signals with same or similar link quality. This helps enhance and improve SRS transmission performance, and further, this can also improve transmission performance of a channel or a signal based on the SRS transmission.

With reference to the sixth aspect, in some possible implementations, the reference signal includes at least one of the following: a channel state information reference signal CSI-RS, a synchronization signal/physical broadcast channel block SSB, an SRS other than the SRS, and a downlink positioning reference signal DL PRS.

According to a seventh aspect, a communication apparatus is provided. For beneficial effects, refer to the descriptions in the first aspect. Details are not described herein again. The communication apparatus has a function of implementing the behavior in the method embodiment in the first aspect. The function may be implemented by hardware, or may be implemented by hardware executing corresponding software. The hardware includes one or more modules corresponding to the foregoing function. In a possible design, the communication apparatus includes a transceiver module, configured to: send configuration information to a terminal device, where the configuration information indicates M sounding reference signal SRS resource sets, a usage of the M SRS resource sets includes one of antenna selection, codebook-based uplink transmission, non-codebook-based uplink transmission, beam management, and positioning, the M SRS resource sets include X first SRS resource sets and Y second SRS resource sets, the X first SRS resource sets include at least one first SRS resource, the Y second SRS resource sets include at least one second SRS resource, a time domain resource corresponding to the at least one first SRS resource is a subband full duplex SBFD type time unit, a time domain resource corresponding to the at least one second SRS resource is a non-SBFD type time unit, M is an integer greater than or equal to 1, and both X and Y are integers greater than or equal to 0; and receive an SRS from the terminal device based on the configuration information. These modules may perform corresponding functions in the method example in the first aspect. For details, refer to the detailed descriptions in the method example. Details are not described herein again.

According to an eighth aspect, a communication apparatus is provided. For beneficial effects, refer to the descriptions in the second aspect. Details are not described herein again. The communication apparatus has a function of implementing the behavior in the method embodiment in the second aspect. The function may be implemented by hardware, or may be implemented by hardware executing corresponding software. The hardware includes one or more modules corresponding to the foregoing function. In a possible design, the communication apparatus includes a transceiver module, configured to: receive configuration information from a network device, where the configuration information indicates M sounding reference signal SRS resource sets, a usage of the M SRS resource sets includes one of antenna selection, codebook-based uplink transmission, non-codebook-based uplink transmission, beam management, and positioning, the M SRS resource sets include X first SRS resource sets and Y second SRS resource sets, the X first SRS resource sets include at least one first SRS resource, the Y second SRS resource sets include at least one second SRS resource, a time domain resource corresponding to the at least one first SRS resource is a subband full duplex SBFD type time unit, a time domain resource corresponding to the at least one second SRS resource is a non-SBFD type time unit, M is an integer greater than or equal to 1, and both X and Y are integers greater than or equal to 0; and send an SRS to the network device based on the configuration information. These modules may perform corresponding functions in the method example in the second aspect. For details, refer to the detailed descriptions in the method example. Details are not described herein again.

According to a ninth aspect, a communication apparatus is provided. For beneficial effects, refer to the descriptions in the third aspect. Details are not described herein again. The communication apparatus has a function of implementing the behavior in the method instance in the third aspect. The function may be implemented by hardware, or may be implemented by hardware executing corresponding software. The hardware or the software includes one or more modules corresponding to the foregoing function. In a possible design, the communication apparatus includes a receiving module, configured to: send an uplink scheduling grant to a terminal device, where the uplink scheduling grant includes a sounding reference signal SRS resource indicator field, a time unit type of an SRS resource indicated by the SRS resource indicator field is the same as a time unit type of uplink transmission scheduled by the uplink scheduling grant, and the time unit type includes a subband full duplex SBFD type and a non-SBFD type; and receive the uplink transmission from the terminal device based on the SRS resource indicator field. These modules may perform corresponding functions in the method example in the third aspect. For details, refer to the detailed descriptions in the method example. Details are not described herein again.

According to a tenth aspect, a communication apparatus is provided. For beneficial effects, refer to the descriptions in the fourth aspect. Details are not described herein again. The communication apparatus has a function of implementing the behavior in the method instance in the fourth aspect. The function may be implemented by hardware, or may be implemented by hardware executing corresponding software. The hardware or the software includes one or more modules corresponding to the foregoing function. In a possible design, the communication apparatus includes a receiving module, configured to: receive an uplink scheduling grant from a network device, where the uplink scheduling grant includes a sounding reference signal SRS resource indicator field, a time unit type of an SRS resource indicated by the SRS resource indicator field is the same as a time unit type of uplink transmission scheduled by the uplink scheduling grant, and the time unit type includes a subband full duplex SBFD type and a non-SBFD type; and send the uplink transmission to the network device based on the SRS resource indicator field. These modules may perform corresponding functions in the method example in the fourth aspect. For details, refer to the detailed descriptions in the method example. Details are not described herein again.

According to an eleventh aspect, a communication apparatus is provided. For beneficial effects, refer to the descriptions in the fifth aspect. Details are not described herein again. The communication apparatus has a function of implementing the behavior in the method example in the fifth aspect. The function may be implemented by hardware, or may be implemented by hardware executing corresponding software. The hardware or the software includes one or more modules corresponding to the foregoing function. In a possible design, the communication apparatus includes a receiving module, configured to: send second indication information to a terminal device, where a time unit type that is indicated by the second indication information and that is of a reference signal associated with a sounding reference signal SRS resource is the same as a type time unit of the SRS resource, and the time unit type includes a subband full duplex SBFD type and a non-SBFD type; and receive, from the terminal device based on the second indication information, an SRS corresponding to the SRS resource. These modules may perform corresponding functions in the method example in the fifth aspect. For details, refer to the detailed descriptions in the method example. Details are not described herein again.

According to a twelfth aspect, a communication apparatus is provided. For beneficial effects, refer to the descriptions in the sixth aspect. Details are not described herein again. The communication apparatus has a function of implementing the behavior in the method example in the sixth aspect. The function may be implemented by hardware, or may be implemented by hardware executing corresponding software. The hardware or the software includes one or more modules corresponding to the foregoing function. In a possible design, the communication apparatus includes a receiving module, configured to: receive second indication information from a terminal, where a time unit type that is indicated by the second indication information and that is of a reference signal associated with a sounding reference signal SRS resource is the same as a type time unit of the SRS resource, and the time unit type includes a subband full duplex SBFD type and a non-SBFD type; and send, to a network device based on the second indication information, an SRS corresponding to the SRS resource. These modules may perform corresponding functions in the method example in the sixth aspect. For details, refer to the detailed descriptions in the method example. Details are not described herein again.

According to a thirteenth aspect, a computer program product is provided. The computer program product includes computer program code, and when the computer program code is run, the method performed by the terminal device in the foregoing aspects is performed.

According to a fourteenth aspect, a computer program product is provided. The computer program product includes computer program code, and when the computer program code is run, the method performed by the network device in the foregoing aspects is performed.

According to a fifteenth aspect, this application provides a chip system. The chip system includes a processor, configured to implement a function of the terminal device in the method in the foregoing aspects. In a possible design, the chip system further includes a memory, configured to store program instructions and/or data. The chip system may include a chip, or may include a chip and another discrete component.

According to a sixteenth aspect, this application provides a chip system. The chip system includes a processor, configured to implement a function of the network device in the method in the foregoing aspects. In a possible design, the chip system further includes a memory, configured to store program instructions and/or data. The chip system may include a chip, or may include a chip and another discrete component.

According to a seventeenth aspect, this application provides a computer-readable storage medium. The computer-readable storage medium stores a computer program. When the computer program is run, the method performed by the terminal device in the foregoing aspects is implemented.

According to an eighteenth aspect, this application provides a computer-readable storage medium. The computer-readable storage medium stores a computer program. When the computer program is run, the method performed by the network device in the foregoing aspects is implemented.

## BRIEF DESCRIPTION OF DRAWINGS

FIG. 1 is a diagram of an architecture of a mobile communication system to which an embodiment of this application is applied;

FIG. 2 is a diagram of DL and UL distribution in a TDD system according to this application;

FIG. 3 is a diagram of DL and UL distribution in SBFD according to this application;

FIG. 4 is a diagram of DL and UL distribution in SFFD according to this application;

FIG. 5 is a diagram of SRS transmission in an SBFD slot and a non-SBFD slot according to this application;

FIG. 6 is a diagram of a communication method according to an embodiment of this application;

FIG. 7 is a diagram of a time unit type of an SRS resource and a time unit type of a reference signal associated with the SRS resource according to an embodiment of this application;

FIG. 8 is a diagram of transmission of an SRS and a PUSCH in an SBFD slot and a non-SBFD slot according to this application;

FIG. 9 is a diagram of another communication method according to an embodiment of this application;

FIG. 10 is a diagram of a time unit type of an SRS resource and a time unit type of a PSUCH according to an embodiment of this application;

FIG. 11 is another diagram of a time unit type of an SRS resource and a time unit type of a PSUCH according to an embodiment of this application;

FIG. 12 is a diagram of still another communication method according to an embodiment of this application;

FIG. 13 is a diagram of a communication apparatus according to an embodiment of this application; and

FIG. 14 is a diagram of another communication apparatus according to an embodiment of this application.

## DESCRIPTION OF EMBODIMENTS

In the specification, claims, and accompanying drawings of this application, the terms "first", "second", "third", and the like are intended to distinguish between different objects but do not limit a particular order.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

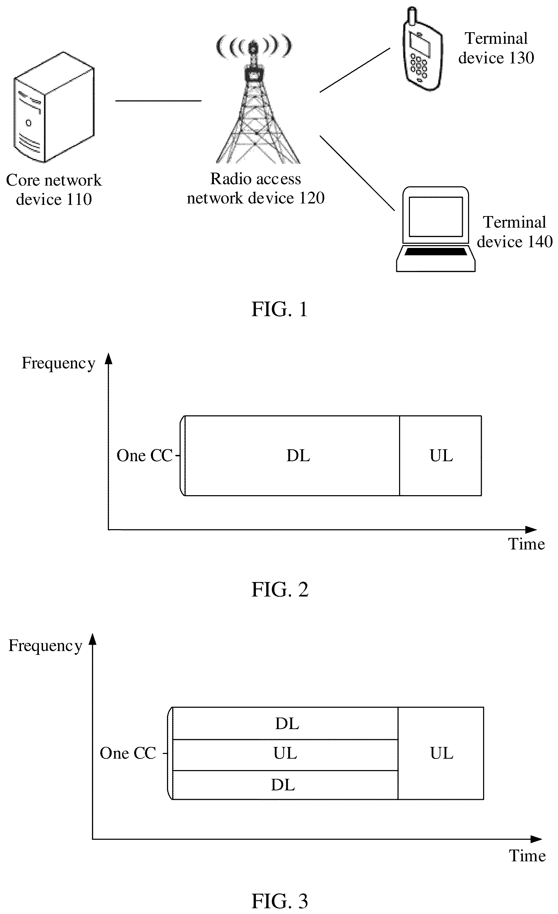

FIG. 1 is a diagram of an architecture of a mobile communication system to which an embodiment of this application is applied. As shown in FIG. 1, the mobile communication system includes a core network device 110, a radio access network device 120, and at least one terminal device (for example, a terminal device 130 and a terminal device 140 shown in FIG. 1). The terminal device is connected to the radio access network device in a wireless manner, and the radio access network device is connected to the core network device in a wireless or wired manner. The core network device and the radio access network device may be independent and different physical devices, or functions of the core network device and logical functions of the radio access network device are integrated into a same physical device, or some functions of the core network device and some functions of the radio access network device are integrated into one physical device. The terminal device may be at a fixed position, or may be movable. FIG. 1 is merely a diagram. The communication system may further include other network devices, for example, may further include a wireless relay device and a wireless backhaul device, which are not shown in FIG. 1. Quantities of core network devices, radio access network devices, and terminal devices included in the mobile communication system are not limited in this embodiment of this application.

The radio access network device is an access device used by the terminal to access the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of a base station, and may further complete a function of a service data adaptation protocol (service data adaptation protocol, SDAP). The DU completes functions of a radio link control layer and a medium access control (medium access control, MAC) layer of a base station, and may further complete some or all of functions of a physical layer. For specific descriptions of the foregoing protocol layers, refer to technical specifications related to a 3rd generation partnership project (3rd generation partnership project, 3GPP). The radio access network device may be a macro base station, may be a micro base station or an indoor base station, or may be a relay node, a donor node, or the like. A specific technology and a specific device form that are used by the radio access network device are not limited in embodiments of this application. For ease of description, a network device is used as an abbreviation of the radio access network device, and the base station is used as an example of the radio access network device.

The terminal device may also be referred to as a terminal, user equipment (user equipment, UE), a mobile station, a mobile terminal, or the like. The terminal device is an entity that is on a user side and that is configured to receive or transmit a signal, and is configured to send an uplink signal to the network device or receive a downlink signal from the network device. The terminal device may be widely used in various scenarios, for example, device-to-device (device-to-device, D2D), vehicle-to-everything (vehicle to everything, V2X) communication, machine-type communication (machine-type communication, MTC), internet of things (internet of things, IOT), virtual reality, augmented reality, industrial control, autonomous driving, telemedicine, a smart grid, smart furniture, smart office, smart wearable, smart transportation, and a smart city. The terminal device may be a mobile phone, a tablet computer, a computer having a wireless transceiver function, a wearable device, a vehicle, an airplane, a ship, a robot, a robotic arm, a smart home device, a smart speaker, or the like, and a sensor such as a train detector or a gas station. A specific technology and a specific device form that are used by the terminal device are not limited in embodiments of this application.

The network device and the terminal device may be at fixed positions or may be movable. The network device and the terminal device may be deployed on land, including being deployed indoors or outdoors, or in a handheld manner or a vehicle-mounted manner; may be deployed on water; or may be deployed on an airplane, a balloon, and a man-made satellite.

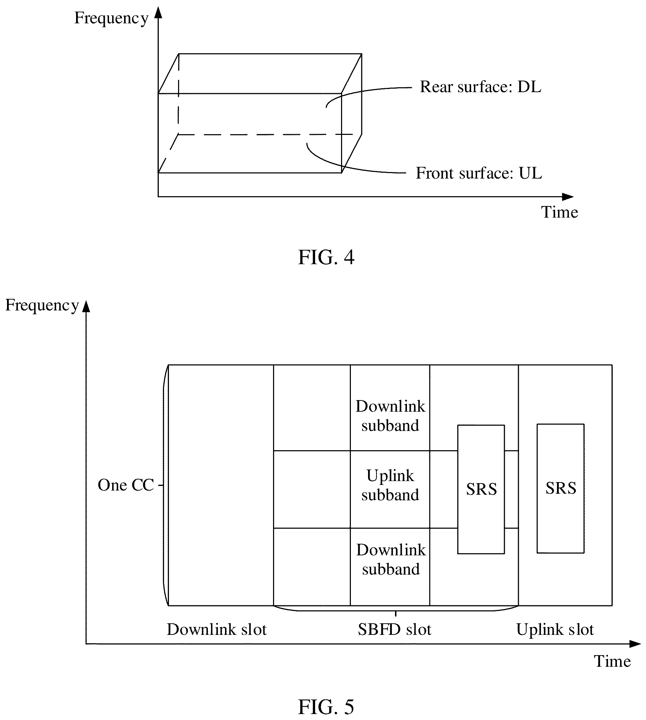

This application may be applied to a 5G new radio (new radio, NR) wireless communication system. The system is deployed in a mid-high frequency band, and implements a high data rate and a low delay by using a large bandwidth. In a time division duplex (time division duplexing, TDD) system, a downlink (downlink, DL) usually occupies a main time resource, resulting in coverage imbalance between the DL and an uplink (uplink, UL), as shown in FIG. 2. Compared with a frequency division duplexing (frequency division duplexing, FDD) system, the TDD system has poorer uplink coverage and a higher uplink delay. To resolve problems of uplink coverage and a delay in the TDD system, an SBFD solution and a single frequency full duplex (single frequency full duplex, SFFD) solution are proposed in R18. In the SBFD solution, one component carrier (component carrier, CC) includes a plurality of subbands, and transmission directions of different subbands may be different. FIG. 3 is a diagram of the SBFD solution. It can be learned from the figure that a middle subband is an uplink subband (uplink subband), and an upper subband and a lower subband are downlink subbands (downlink subband). In the SBFD solution, signal sending and receiving may be simultaneously performed on one symbol. FIG. 4 is a diagram of the SFFD solution. It can be learned from the figure that simultaneous receiving and sending on one symbol may be implemented on an entire CC. Therefore, in the SBFD solution, different frequency domain resources are used for the uplink and the downlink. In the SFFD solution, a same frequency domain resource is used for the uplink and the downlink. Currently, most companies support a solution of "subband full duplex on a network device side and half duplex on a terminal device side" in the first phase. The half duplex on the terminal device means that in the TDD system, the terminal device can perform only receiving or sending but cannot simultaneously perform receiving and sending on one symbol. In this solution, uplink transmission resources available to the terminal device increase. This can effectively improve UL coverage and reduce a UL delay.

The NR system includes an SRS. The SRS is mainly used for uplink channel measurement. Based on an SRS measurement result, the system may perform time-frequency resource scheduling, link adaptation, massive multiple-input multiple-output (multiple-input multiple-output, MIMO), and the like. In the NR system, the SRS may be further used for beam management, including beam training, beam switching, and the like. In addition, for the TDD system, channel state information of a downlink channel and the like may be further obtained based on reciprocity between uplink and downlink channels and by using the SRS. In addition, the SRS may be further used for positioning, and the network device may estimate a location of the terminal device based on the SRS from the terminal device.

Currently, an SRS configuration is configured based on a UL BWP, that is, an SRS may be transmitted on an uplink subband. If some frequency resources in the UL BWP are configured as a downlink subband or guard band, for example, in an SBFD slot/symbol, if an SRS frequency resource overlaps the downlink subband or guard band, SRS transmission is unclear, and SRS transmission is abnormal. For example, as shown in FIG. 5, for an SRS transmitted in an SBFD slot, some SRS frequency resources fall outside an uplink subband range, namely, fall on a downlink subband. Consequently, SRS transmission is unclear.

Embodiments of this application provide a communication method and a communication apparatus, to improve SRS transmission performance.

This application may be applied to a wireless communication system including but not limited to subband full duplex on a network device side and half duplex on a terminal device side. As shown in FIG. 1, there are the terminal device 130 and the terminal device 140 in a coverage area of the network device 120. The terminal device 130 may send an uplink signal, and the terminal device 140 receives a downlink signal; or the terminal device 140 sends an uplink signal, and the terminal device 130 receives a downlink signal.

In this application, the terminal device and the network device may be connected through an air interface (air interface), or may be connected through another interface. This is not limited.

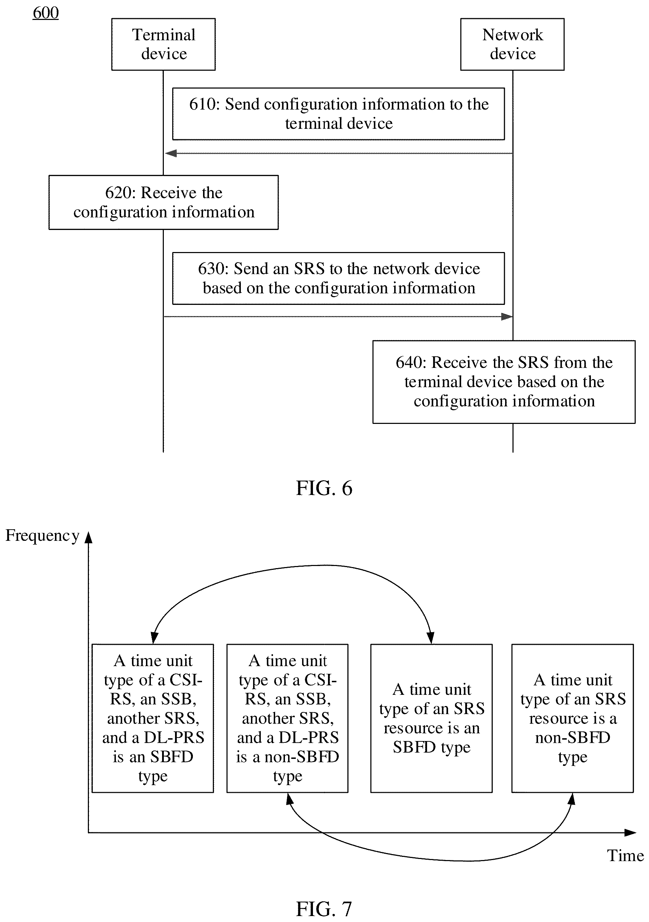

FIG. 6 shows a communication method 600 according to an embodiment of this application. The method 600 may be performed by a network device and a terminal device, for example, the radio access network device 120 and the terminal device 130 (or the terminal device 140) in FIG. 1. The method 600 may include steps S610 to S640. Steps S610 and S640 may be performed by the network device, and steps S620 and S630 may be performed by the terminal device.

S610: Send configuration information to the terminal device, where the configuration information indicates M SRS resource sets, a usage of the M SRS resource sets includes one of antenna selection, codebook-based uplink transmission, non-codebook-based uplink transmission, beam management, and positioning, the M SRS resource sets include X first SRS resource sets and Y second SRS resource sets, the X first SRS resource sets include at least one first SRS resource, the Y second SRS resource sets include at least one second SRS resource, a time domain resource corresponding to the at least one first SRS resource is an SBFD type time unit, a time domain resource corresponding to the at least one second SRS resource is a non-SBFD type time unit, M is an integer greater than or equal to 1, and both X and Y are integers greater than or equal to 0.

The usage of the M SRS resource sets in this embodiment of this application includes one of antenna selection, codebook-based uplink transmission, non-codebook-based uplink transmission, beam management, and positioning. In other words, the usage of the M SRS resource sets is unique. For example, the M SRS resource sets may be used for antenna selection, codebook-based uplink transmission, non-codebook-based uplink transmission, or the like.

It should be noted that, in this embodiment of this application, that the M SRS resource sets are used for one of antenna selection, codebook-based uplink transmission, non-codebook-based uplink transmission, beam management, and positioning is not limited. The M SRS resource sets may alternatively be used for another usage. This is not limited, for example, the M SRS resource sets may be further used for cross-link interference measurement.

Optionally, in some possible implementations, the time domain resource corresponding to the at least one first SRS resource may include an SBFD type time unit and a non-SBFD type time unit, and the time domain resource corresponding to the at least one second SRS resource may include a non-SBFD type time unit and an SBFD type time unit. This is not limited.

In specific implementation, the network device may send the configuration information to the terminal device by using signaling, for example, a system information block (system information block, SIB), radio resource control (radio resource control, RRC) signaling, a multimedia access control control element (media access control control element, MAC CE), and downlink control information (downlink control information, DCI).

In this embodiment of this application, the SBFD type time unit may include an SBFD slot and an SBFD symbol, and the non-SBFD type time unit may include a non-SBFD slot and a non-SBFD symbol. The non-SBFD slot may include at least one of an uplink slot, a downlink slot, and a flexible slot, and the non-SBFD symbol may include at least one of an uplink symbol, a downlink symbol, and a flexible symbol.

For an SBFD configuration, there are two possible configuration manners depending on whether a slot includes both an SBFD symbol and a non-SBFD symbol. The SBFD symbol may be considered as a symbol configured with SBFD, and the non-SBFD symbol may be considered as a symbol not configured with SBFD.

(1) The SBFD configuration is at a slot level. To be specific, all symbols included in one slot may be configured as SBFD symbols, or may be configured as non-SBFD symbols.

(2) The SBFD configuration is at a symbol level. To be specific, some symbols included in one slot may be configured as SBFD symbols, and the other symbols may be configured as non-SBFD symbols.

The SBFD configuration is not specifically limited in this embodiment of this application.

In addition, as shown in FIG. 3, for one carrier, a frequency resource configuration may include at least a DL subband and a UL subband. To reduce cross-link interference caused between downlink transmission on a DL subband and uplink transmission on a UL subband, a guard band (guard band) may be further defined between the DL subband and the UL subband. Whether a subband needs to be explicitly defined and whether a signal can be transmitted on the subband are not specifically limited in this application. In other words, in this embodiment of this application, whether the guard band exists between the DL subband and the UL subband and whether uplink or downlink transmission can be performed on the guard band if the guard band exists are not limited. In addition, whether the DL subband can overlap the UL subband is not specifically limited in this application.

S620: Receive the configuration information.

S630: Send an SRS to the network device based on the configuration information.

In this embodiment of this application, after receiving the configuration information, the terminal device may send the SRS to the network device based on the configuration information. Specifically, the M SRS resource sets indicated by the configuration information include the X first SRS resource sets and the Y second SRS resource sets, the time domain resource corresponding to the at least one first SRS resource included in the X first SRS resource sets is the SBFD type time unit, and the time domain resource corresponding to the at least one second SRS resource included in the Y second SRS resource sets is the non-SBFD type time unit. Therefore, when the terminal device sends the SRS, if an SRS frequency resource includes both an uplink subband and a downlink subband, or an SRS frequency resource overlaps a downlink subband and an uplink subband, the terminal device may send the SRS to the network device on the at least one first SRS resource included in the X first SRS resource sets, that is, send the SRS the network device in the SBFD type time unit. If an SRS frequency resource includes an uplink subband or a downlink subband, or an SRS frequency resource is configured as a downlink subband or an uplink subband, the terminal device may send the SRS to the network device on the at least one second SRS resource included in the Y second SRS resource sets, that is, send the SRS the network device in the non-SBFD type time unit.

S640: Receive the SRS from the terminal device based on the configuration information.

The network device may receive, based on the configuration information, the SRS from the terminal device. Specifically, if the terminal device sends the SRS in the SBFD type time unit, correspondingly, the network device may receive the SRS in the SBFD type time unit. If the terminal device sends the SRS in the non-SBFD type time unit, correspondingly, the network device may receive the SRS in the non-SBFD type time unit.

In some possible implementations, that the network device receives the SRS from the terminal device may alternatively be not based on the configuration information. In other words, regardless of the type time unit in which the terminal device sends the SRS, the network device needs only to receive the SRS.

For example, if the terminal device sends the SRS in the SBFD type time unit, the network device may receive the SRS in the SBFD type time unit, or may receive the SRS in the non-SBFD type time unit. If the terminal device sends the SRS in the non-SBFD type time unit, the network device may receive the SRS in the non-SBFD type time unit, or may receive the SRS in the SBFD type time unit. This is not limited.

In the solution provided in this embodiment of this application, the M SRS resource sets indicated by the configuration information from the network device to the terminal device include the X first SRS resource sets and the Y second SRS resource sets. In addition, the time domain resource corresponding to the at least one first SRS resource included in the X first SRS resource sets is the SBFD type time unit, and the time domain resource corresponding to the at least one second SRS resource included in the Y second SRS resource sets is the non-SBFD type time unit. Therefore, the terminal device can send the SRS based on the configuration information. For example, for the at least one first SRS resource included in the X first SRS resource sets, the terminal device may send the SRS to the network device on an uplink subband in the SBFD type time unit; and for the at least one second SRS resource included in the Y second SRS resource sets, the terminal device may send the SRS to the network device in the non-SBFD type time unit. This can improve SRS transmission performance.

Optionally, in some embodiments, X and Y are the same.

In this embodiment of this application, X and Y are the same. To be specific, for a specific usage (for example, one of antenna selection, codebook-based uplink transmission, non-codebook-based uplink transmission, beam management, and positioning): Quantities of first SRS resource sets and second SRS resource sets included in the M SRS resource sets indicated by the configuration information configured by the network device for the terminal device are the same. For example, both X and Y are 1, or both X and Y are 2. This configuration manner can simplify SRS resource configuration, indication, and use processes, and help reduce system processing complexity.

In some possible implementations, X and Y may alternatively be different. For a specific usage (for example, one of antenna selection, codebook-based uplink transmission, non-codebook-based uplink transmission, beam management, and positioning): Quantities of first SRS resource sets and second SRS resource sets included in the M SRS resource sets indicated by the configuration information configured by the network device for the terminal device are different. For example, X is 1 and Y is 2, or X is 2 and Y is 1. In this configuration manner, the SRS resource configuration can be more flexible.

It may be understood that, if a value of either X or Y is 0, it may be considered that the M SRS resource sets indicated by the configuration information configured by the network device for the terminal device include one type of resource sets. For example, if X=0 and Y≠0, it indicates that the M SRS resource sets indicated by the configuration information configured by the network device for the terminal device include the Y second SRS resource sets. If X≠0 and Y=0, it indicates that the M SRS resource sets indicated by the configuration information configured by the network device for the terminal device include the X first SRS resource sets.

Optionally, in some embodiments, if X is greater than 1, each of the X first SRS resource sets includes a same quantity of SRS resources; or

if Y is greater than 1, each of the Y second SRS resource sets includes a same quantity of SRS resources; or
if M is greater than 1, each of the M SRS resource sets includes a same quantity of SRS resources.

In this embodiment of this application, when X is greater than 1, each of the X first SRS resource sets includes a same quantity of SRS resources. For example, it is assumed that X=2, and there are two first SRS resource sets: a first SRS resource set 1 and a first SRS resource set 2. In this case, a quantity of first SRS resources included in the first SRS resource set 1 is the same as a quantity of first SRS resources included in the first SRS resource set 2. For example, the first SRS resource set 1 includes 10 first SRS resources, and the first SRS resource set 2 also includes 10 first SRS resources.

In this embodiment of this application, when Y is greater than 1, each of the Y second SRS resource sets includes a same quantity of SRS resources. For example, it is assumed that Y=2, and there are two second SRS resource sets: a second SRS resource set 1 and a second SRS resource set 2. In this case, a quantity of second SRS resources included in the second SRS resource set 1 is the same as a quantity of second SRS resources included in the second SRS resource set 2. For example, the second SRS resource set 1 includes eight second SRS resources, and the second SRS resource set 2 also includes eight second SRS resources.

In this embodiment of this application, the first SRS resource set and the second SRS resource set may not be distinguished. When M is greater than 1, each of the M SRS resource sets includes a same quantity of SRS resources.

For example, it is assumed that X=Y=1, and a quantity of first SRS resources included in the first SRS resource set is the same as a quantity of second SRS resources included in the second SRS resource set. For example, the first SRS resource set includes eight first SRS resources, and the second SRS resource set also includes eight second SRS resources.

For another example, it is assumed that X=1 and Y=2, and a quantity of first SRS resources included in the first SRS resource set is the same as a quantity of second SRS resources included in the two second SRS resource sets. For example, the first SRS resource set includes eight first SRS resources, and each of the two second SRS resource sets includes eight second SRS resources.

In the solution provided in this embodiment of this application, when X is greater than 1, each of the X first SRS resource sets includes the same quantity of SRS resources; or when Y is greater than 1, each of the Y second SRS resource sets includes the same quantity of SRS resources; or the first SRS resource set and the second SRS resource set are not distinguished, and each of the M SRS resource sets includes the same quantity of SRS resources. This configuration manner can simplify SRS resource configuration, indication, and use processes, and help reduce system processing complexity.

Optionally, in some possible implementations, if X is greater than 1, quantities of SRS resources included in at least two first SRS resource sets in the X first SRS resource sets are different; or

if Y is greater than 1, quantities of SRS resources included in at least two second SRS resource sets in the Y second SRS resource sets are different; or
if M is greater than 1, quantities of SRS resources included in at least two SRS resource sets in the M SRS resource sets are different.

In this embodiment of this application, when X is greater than 1, quantities of SRS resources included in at least two first SRS resource sets in the X first SRS resource sets are different. For example, it is assumed that X=3, and there are three first SRS resource sets: a first SRS resource set 1, a first SRS resource set 2, and a first SRS resource set 3. In this case, quantities of SRS resources included in at least two first SRS resource sets in the three first SRS resource sets are different. For example, a quantity of first SRS resources included in the first SRS resource set 1 is different from a quantity of first SRS resources included in the first SRS resource set 2. For example, the first SRS resource set 1 includes 10 first SRS resources. The first SRS resource set 2 includes eight first SRS resources. Other similar cases are not specifically described in this application again.

In this embodiment of this application, when Y is greater than 1, quantities of SRS resources included in at least two second SRS resource sets in the Y second SRS resource sets are different. For example, it is assumed that Y=3, and there are three second SRS resource sets: a second SRS resource set 1, a second SRS resource set 2, and a second SRS resource set 3. In this case, quantities of SRS resources included in at least two second SRS resource sets in the three second SRS resource sets are different. For example, a quantity of second SRS resources included in the second SRS resource set 1 is different from a quantity of second SRS resources included in the second SRS resource set 2. For example, the second SRS resource set 1 includes eight second SRS resources. The second SRS resource set 2 includes 10 second SRS resources. Other similar cases are not specifically described in this application again.

In this embodiment of this application, the first SRS resource set and the second SRS resource set may not be distinguished, and quantities of SRS resources included in at least two SRS resource sets in the M SRS resource sets are different.

For example, it is assumed that X=Y=2, that is, the M SRS resource sets include two first SRS resource sets and two second SRS resource sets, and quantities of SRS resources included in at least two SRS resource sets in the four SRS resource sets are different. It is assumed that the two first SRS resource sets are: a first SRS resource set 1 and a first SRS resource set 2, and the two second SRS resource sets are: a second SRS resource set 1 and a second SRS resource set 2. In this case, the first SRS resource set 1 includes eight first SRS resources, and the second SRS resource set 1 includes 10 second SRS resources; or the first SRS resource set 1 includes eight first SRS resources, and the first SRS resource set 2 includes 10 first SRS resources; or the second SRS resource set 1 includes 10 second SRS resources, and the second SRS resource set 2 includes eight second SRS resources. Other similar cases are not specifically described in this application again.

For another example, it is assumed that X=1 and Y=2, that is, the M SRS resource sets include one first SRS resource set and two second SRS resource sets, and quantities of SRS resources included in at least two SRS resource sets in the three SRS resource sets are different. It is assumed that the two second SRS resource sets are: a second SRS resource set 1 and a second SRS resource set 2. In this case, the first SRS resource set includes eight first SRS resources, and the second SRS resource set 1 includes 10 second SRS resources; or the second SRS resource set 1 includes 10 second SRS resources, and the second SRS resource set 2 includes eight second SRS resources. Other similar cases are not specifically described in this application again.

In the solution provided in this embodiment of this application, when X is greater than 1, quantities of SRS resources included in at least two first SRS resource sets in the X first SRS resource sets are different; or when Y is greater than 1, quantities of SRS resources included in at least two second SRS resource sets in the Y second SRS resource sets are different; or the first SRS resource set and the second SRS resource set are not distinguished, and quantities of SRS resources included in at least two SRS resource sets in the M SRS resource sets are different. In this configuration manner, the SRS resource configuration can be more flexible.

Optionally, in some embodiments, the configuration information includes first indication information, and the first indication information indicates that a time domain resource corresponding to an SRS resource included in the SRS resource set is the SBFD type time unit or the non-SBFD type time unit.

In this embodiment of this application, for the SRS resource included in the SRS resource set, the first indication information may indicate that the time domain resource corresponding to the SRS resource is the SBFD type time unit or the non-SBFD type time unit.

For example, it is assumed that the SRS resource set includes 10 SRS resources: an SRS resource 1, an SRS resource 2, an SRS resource 3, an SRS resource 4, an SRS resource 5, an SRS resource 6, an SRS resource 7, an SRS resource 8, an SRS resource 9, and an SRS resource 10.

The first indication information may directly indicate that the time domain resource corresponding to the SRS resource included in the SRS resource set is the SBFD type time unit or the non-SBFD type time unit, or may indirectly indicate that the time domain resource corresponding to the SRS resource included in the SRS resource set is the SBFD type time unit or the non-SBFD type time unit. This is not limited.

(1) The first indication information directly indicates that the time domain resource corresponding to the SRS resource included in the SRS resource set is the SBFD type time unit or the non-SBFD type time unit.

The first indication information may directly indicate that time domain resources corresponding to some or all resources in the SRS resource set are SBFD type time units. For example, the first indication information indicates that time domain resources corresponding to the SRS resource 1, the SRS resource 2, and the SRS resource 3 are SBFD type time units; or the first indication information indicates that time domain resources corresponding to the 10 SRS resources are all SBFD type time units. If the first indication information indicates that time domain resources corresponding to the SRS resource 1, the SRS resource 2, and the SRS resource 3 are SBFD type time units. In this case, it may be considered that time domain resources corresponding to the other SRS resources (including the SRS resource 4, the SRS resource 5, the SRS resource 6, the SRS resource 7, the SRS resource 8, the SRS resource 9, and the SRS resource 10) are non-SBFD type time units.

The first indication information may directly indicate that time domain resources corresponding to some or all resources in the SRS resource set are non-SBFD type time units. For example, the first indication information indicates that time domain resources corresponding to the SRS resource 1, the SRS resource 2, the SRS resource 3, and the SRS resource 4 are non-SBFD type time units; or the first indication information indicates that time domain resources corresponding to the 10 SRS resources are all non-SBFD type time units. If the first indication information indicates that time domain resources corresponding to the SRS resource 1, the SRS resource 2, the SRS resource 3, and the SRS resource 4 are non-SBFD type time units. In this case, it may be considered that time domain resources corresponding to the other SRS resources (including the SRS resource 5, the SRS resource 6, the SRS resource 7, the SRS resource 8, the SRS resource 9, and the SRS resource 10) are SBFD type time units.

Specifically, the first indication information may indicate, by using identifiers, that time domain resources corresponding to some or all resources in the SRS resource set are SBFD type time units. It is assumed that an identifier "0" indicates that the time domain resource corresponding to the SRS resource is the SBFD type time unit, and an identifier "1" indicates that the time domain resource corresponding to the SRS resource is the non-SBFD type time unit. In this case, the first indication information indicates that identifiers of three resources, namely, the SRS resource 1, the SRS resource 2, and the SRS resource 3, are "0", or indicates that identifiers of the seven resources, namely, the resource 4, the SRS resource 5, the SRS resource 6, the SRS resource 7, the SRS resource 8, the SRS resource 9, and the SRS resource 10, are all "1".

If the first indication information indicates that identifiers of the three resources, namely, the SRS resource 1, the SRS resource 2, and the SRS resource 3, are "0", it may be considered that time domain resources corresponding to the SRS resource 1, the SRS resource 2, and the SRS resource 3 are SBFD type time units, and time domain resources corresponding to the other SRS resources (including the SRS resource 4, the SRS resource 5, the SRS resource 6, the SRS resource 7, the SRS resource 8, the SRS resource 9, and the SRS resource 10) may be non-SBFD type time units by default.

If the first indication information indicates that identifiers of the SRS resource 4, the SRS resource 5, the SRS resource 6, the SRS resource 7, the SRS resource 8, the SRS resource 9, and the SRS resource 10 are all "1", it may be considered that time domain resources corresponding to seven resources, namely, the SRS resource 4, the SRS resource 5, the SRS resource 6, and the SRS resource 7, the SRS resource 8, the SRS resource 9, and the SRS resource 10 are non-SBFD type time units, and time domain resources corresponding to the other SRS resources (including the SRS resource 1, the SRS resource 2, and the SRS resource 3) may be SBFD type time units by default.

Certainly, the first indication information may alternatively indicate that identifiers of the 10 SRS resources, namely, the SRS resource 1, the SRS resource 2, the SRS resource 3, the SRS resource 4, the SRS resource 5, the SRS resource 6, the SRS resource 7, the SRS resource 8, the SRS resource 9, and the SRS resource 10, are all "0" or all "1". If the first indication information indicates that the identifiers of the 10 SRS resources are all "0", it may be considered that the time domain resources corresponding to the 10 SRS resources are all SBFD type time units; or if the first indication information indicates that the identifiers of the 10 SRS resources are all "1", it may be considered that the time domain resources corresponding to the 10 SRS resources are all non-SBFD type time units.

(2) The first indication information indirectly indicates that the time domain resource corresponding to the SRS resource included in the SRS resource set is the SBFD type time unit or the non-SBFD type time unit.

For example, whether the first indication information exists indicates that the SRS resource included in the SRS resource set is the SBFD type time unit or the non-SBFD type time unit.

Specifically, if the configuration information includes the first indication information, it may be considered that the time domain resource corresponding to the SRS resource in the SRS resource set is the SBFD type time unit; or if the configuration information does not include the first indication information, it may be considered that the time domain resource corresponding to the SRS resource in the SRS resource set is the non-SBFD type time unit.

Alternatively, if the configuration information includes the first indication information, it may be considered that the time domain resource corresponding to the SRS resource in the SRS resource set is the non-SBFD type time unit; or if the configuration information does not include the first indication information, it may be considered that the time domain resource corresponding to the SRS resource in the SRS resource set is the SBFD type time unit.

In the solution provided in this embodiment of this application, the configuration information from the network device to the terminal device may include the first indication information, and the first indication information may indicate that the time domain resource corresponding to the SRS resource included in the SRS resource set is the SBFD type time unit or the non-SBFD type time unit, so that the terminal device can send the SRS based on the first indication information. This can improve SRS transmission performance.

For ease of understanding the solutions of this application, the following first briefly describes an SRS resource and an SRS resource set in NR.

1. One SRS resource

- A sequence with a low peak-to-average power ratio (peak to average power ratio, PAPR), that is, a ZC (zadoff-Chu) sequence, is used.
- One, two, or four SRS ports (ports) may be configured.
- One slot may cover 1, 2, 4, 8, 10, 12, and 14 consecutive orthogonal frequency division multiplexing (orthogonal frequency division multiplexing, OFDM) symbols.

- All SRS ports appear in each OFDM symbol of one resource.
- The SRS resource may be periodic, aperiodic, or semi-persistent in time domain.
- One repetition factor, for example, 1, 2, or 4, may be configured for one SRS resource, and subcarriers used during retransmission are the same.
- In frequency domain, the SRS resource is transmitted in comb mode. That is, transmission of each SRS port is mapped to every two, four, or eight subcarriers of one OFDM symbol, which is referred to as a transmission comb (transmission comb). Currently, NR supports comb-2, comb-4, and comb-8.
- Frequency hopping transmission is supported, including intra-slot frequency hopping transmission and inter-slot frequency hopping transmission. The frequency hopping transmission means that different frequency resources are used for transmission at different moments.

2. One SRS resource set

- A maximum of 64 SRS resources can be included.
- A plurality of included SRS resources are of a same time domain type, that is, are all periodic, aperiodic, or semi-persistent.
- The plurality of included SRS resources may be in different slots or in a same slot (either adjacent or non-adjacent).
- Only one "usage" ("usage"), for example, one of beam management (beam management), codebook (codebook), non-codebook (non-codebook), and antenna switching (antenna switching), can be configured. Meanings of different usages are shown in Table 1.

Table 1

| SRS Resource Set Configuration Parameter Usage | Usage |
| --- | --- |
| Beam management | Used for assisting UE in determining an appropriate uplink transmit beam or assisting the gNB in determining a receive beam. |
| Codebook | Used for codebook-based UL transmission (codebook-based UL transmission), for example, used by a gNB to determine a precoder (precoder) for a physical uplink shared channel (physical uplink shared channel, PUSCH) or a physical uplink control channel (physical uplink control channel, PUCCH). |
| Non-codebook | Used for non-codebook-based UL transmission (non-codebook-based UL transmission). For example, UE sends an SRS through a preliminary precoder determined based on a downlink signal like a channel state information reference signal (channel statement information reference signal, CSI-RS), and then determines, based on an SRS resource indicator (SRS resource indicator, SRI) field indicated by a base station, information such as a precoder and a rank used for a PUSCH or a PUCCH. |
| Antenna switching | Channel state information of a downlink is obtained through measurement based on channel reciprocity. |

As described above, one SRS resource set can be configured with only one usage, and one UE has a plurality of usages in most cases. Therefore, a plurality of SRS resource sets need to be configured for the UE, and for a specific usage, one or more related SRS resource sets may be configured. It should be noted that once an SRS resource is configured in an SRS resource set for a specific usage, the SRS resource is no longer configured for an SRS resource set for another usage.

The following describes that the SRS resource set configuration parameter is configured for allocation for different usages.

(1) SRS used for codebook-based UL transmission (for example, a PUSCH or a PUCCH)

When a "usage" parameter of an SRS resource set is set to "codebook", an SRS resource included in or associated with the SRS resource set is used for measuring an uplink MIMO channel, to determine an uplink precoder and a rank from a predefined codebook, and there are other transmission parameters used in uplink adaptation.

One SRS resource set used for codebook-based UL transmission may include one or two SRS resources. If the SRS resource set includes two SRS resources, the two SRS resources may be used in a scenario in which the UE has two antenna panels (antenna panels). The UE may send one of the SRS resources through each antenna panel. Therefore, the gNB may determine a best antenna panel by measuring the SRS. In this way, the gNB can use a 1-bit SRS field in a PUSCH scheduling grant (scheduling grant) to indicate one of the UE antenna panels, and the UE can send the PUSCH in a same manner (antenna implementation) as sending the SRS resource indicated by the SRI field, and may use latest transmission of the SRS resource indicated by the SRI field before the PUSCH scheduling grant. The PUSCH scheduling grant may be carried in downlink control information (downlink control information, DCI).

It should be noted that, that an SRS resource set that supports codebook-based UL transmission includes two SRS resources is a UE capability. If the UE supports including only one SRS resource in the SRS resource set, the UE may use the SRS resource by default. Correspondingly, the SRI field in the DCI is 0 bits, or the DCI does not include the SRI field. In addition, the PUSCH scheduling grant further includes a 1-bit second SRS resource indicator (second SRS resource indicator) field, which is mainly used in a scenario in which a plurality of PUSCHs are scheduled. The second SRS resource indicator field indicates another SRS resource associated with the PUSCH.

One or two SRS resource sets with the "usage" parameter configured as codebook can be configured for UE. When only one SRS resource set used for codebook is configured, the gNB and the UE use the SRS resource set by default. When two SRS resource sets used for codebook are configured, the SRS resource set indicator field in the DCI may indicate which SRS resource sets are used. Specifically, values and meanings of the indicator field are shown in Table 2.

Table 2

| Bit Field Mapped to Index (bit field mapped to index) | SRS Resource Set Indicator (SRS resource set indicator) Field |
|---|---|
| 0 | The SRS resource indicator field and the precoding information and number of layers field are associated with the first SRS resource set.<br>The second SRS resource indicator field and the second precoding information field are reserved. |
| 1 | The SRS resource indicator field and the precoding information and number of layers field are associated with the second SRS resource set.<br>The second SRS resource indicator field and the second precoding information and number of layers field are reserved. |
| 2 | The SRS resource indicator field and the precoding information and number of layers field are associated with the first SRS resource set.<br>The second SRS resource indicator field and the second precoding information and number of layers field are associated with the second SRS resource set. |
| 3 | The SRS resource indicator field and the precoding information and number of layers field are associated with the first SRS resource set.<br>The second SRS resource indicator field and the second precoding information and number of layers field are associated with the second SRS resource set. |

(2) SRS used for non-codebook-based UL transmission (for example, a PUSCH or a PUCCH)

In NR, non-codebook-based PUSCH transmission is introduced, which is not supported in LTE. The non-codebook-based PUSCH transmission is PUSCH transmission based on reciprocity between uplink and downlink channels. A specific method is as follows: One SRS resource is configured to be associated with one downlink reference signal, for example, a CSI-RS or a synchronization signal/physical broadcast channel block (synchronization signal/PBCH block, SSB), and the UE selects an appropriate precoder based on channel information obtained by measuring the downlink reference signal, and then the UE may send the SRS resource through the selected precoder based on reciprocity between downlink and uplink channels. Further, the UE ensures that an SRS port of the SRS resource and a subsequently scheduled physical uplink shared channel demodulation reference signal (physical uplink shared channel demodulation reference signal, PUSCH DMRS) port use a same precoder. The gNB then measures the channel for the SRS resource and selects which can be used for PUSCH transmission.

One SRS resource set used for the non-codebook-based UL transmission may include one, two, or four SRS resources. A specific quantity of included SRS resources mainly depends on the UE capability, and each SRS resource has only one SRS port. Each SRS resource represents one PUSCH layer (layer). Therefore, if the UE supports only two-layer PUSCH transmission, two SRS resources are configured or associated in one SRS resource set.

Similar to the code-based PUSCH transmission, the gNB may select, by using an SRI indicator field in a PUSCH scheduling grant (for example, DCI), some or all of these SRS resources for PUSCH transmission, and the UE transmits one PUSCH layer on each indicated SRS resource. For example, if rank-1 PUSCH transmission is scheduled, only one of the plurality of SRS resources is selected for the SRI indicator field. Further, the UE needs to send the PUSCH layer in a same manner as sending the SRS resource indicated by the SRI indicator field, and uses latest transmission of the SRS resource indicated by the SRI indicator field before the PUSCH scheduling grant.

One or two SRS resource sets with the "usage" parameter configured as codebook can be configured for UE. When only one SRS resource set used for non-codebook is configured, the gNB and the UE use the SRS resource set by default. When two SRS resource sets used for non-codebook are configured, the SRS resource set indicator field in the PUSCH scheduling grant indicates which SRS resource sets are used. A specific method is the same as the foregoing method for determining the SRS resource set used for codebook. Details are not described again.

(3) SRS used for beam management

When a "usage" parameter of an SRS resource set is set to "beam management", an SRS resource included in or associated with the SRS resource set is used for assisting in determining a transmit beam for uplink transmission on a UE side and determining a receive beam for uplink transmission on a gNB side. Therefore, in this scenario, an SRS resource set configured with a plurality of SRS resources may correspond to different or same transmit beams (on the UE side) on different OFDM symbols. To support a scenario in which UE has a plurality of antenna panels to send uplink beams, a plurality of SRS resource sets are allowed to be simultaneously configured for the UE. The UE may select to use a specific antenna panel to send SRS resources that belong to a same SRS resource set. A mapping relationship between an SRS resource set and a UE antenna panel depends on implementation of the UE.

Therefore, the gNB may use the SRS sources of these SRS resource sets to evaluate different uplink transmit beams and select which sent SRS resources (for example, beams) are preferred and can be used for scheduled PUSCH transmission. To send the PUSCH through these beams, these selected SRS resources are subsequently configured as a spatial relation (spatial relation) of SRSs used for a codebook-based or non-codebook-based PUSCH. The spatial relation is defined on the UE side, and is used to configure an association between a downlink signal and an uplink signal or an association between two uplink signals. When these selected SRS resources are configured as the spatial relation of the SRSs used for the codebook-based or non-codebook-based PUSCH, it means that these SRS resources used for beam management may be used as a reference for SRS-based link adaptation measurement used for PUSCH transmission.

(4) SRS used for antenna switching

The SRS used for antenna switching is introduced to enable the gNB to obtain uplink channel state information by measuring the SRS based on reciprocity between uplink and downlink channels to assist downlink transmission, for example, physical downlink shared channel (physical downlink shared channel, PDSCH) transmission. When "usage" of an SRS resource set is configured as antenna switching, an SRS resource included in the SRS resource set is used for this purpose. An SRS resource set whose "usage" is configured as antenna switching may be used for a terminal device with different quantities of transmit antennas (Tx antenna) and receive antennas (RX antenna). In this scenario, the quantity of Tx antennas of the terminal device is usually less than the quantity of RX antennas. Therefore, the terminal device needs to send SRS resources through different antennas at different moments, which is referred to as antenna switching (antenna switching). An SRS resource set whose "usage" is configured as antenna switching may also be used for a terminal device with same quantities of transmit antenna branches (Tx antenna branch) and receive antenna branches (RX antenna branch). In this scenario, the terminal device can simultaneously send SRS resources through different Tx antennas without performing antenna switching. For different UE antenna capabilities, such as 1 transmit 1 receive (1T1R), 1 transmit 2 receive (1T2R), 1 transmit 4 receive (1T4R), 2 transmit 2 receive (2T2R), 2 transmit 4 receive (2T4R), and 4 transmit 4 receive (4T4R), configurations of an SRS resource set and SRS resources included in the SRS resource set are also different.

The foregoing describes that one usage may be configured for one SRS resource set. If the M SRS resource sets in this application are used for codebook-based uplink transmission or non-codebook-based uplink transmission, that is, the "usage" of the M SRS resource sets is configured as codebook or non-codebook, for the SRS resource set indicator field in the PUSCH scheduling grant, the SRS resource set indicator field is related to a PUSCH type scheduled by the PUSCH scheduling grant. For details, refer to the following manner. The PUSCH scheduling grant may be carried in DCI, and the DCI used for scheduling PUSCH transmission includes a DCI format 0_0 (DCI format 0_0), a DCI format 0_1, a DCI format 0_2, and the like, or may be carried in another channel or signal, for example, a random access response uplink grant (random access response uplink grant, RAR UL grant).

**Manner 1**

Optionally, in some embodiments, the method 600 further includes:

The network device sends an uplink scheduling grant to the terminal device, where the uplink scheduling grant includes an SRS resource indicator field, a time unit type of an SRS resource indicated by the SRS resource indicator field is the same as a time unit type of uplink transmission scheduled by the uplink scheduling grant, and the time unit type includes the SBFD type and the non-SBFD type.

Correspondingly, the terminal device receives the uplink scheduling grant.

Specifically, if the time unit type of the uplink transmission scheduled by the uplink scheduling grant is the SBFD type, the time unit type of the SRS resource indicated by the SRS resource indicator field is also the SBFD type, in other words, the SRS resource indicated by the SRS resource indicator field is an SRS resource in the at least one first SRS resource; or if the time unit type of the uplink transmission scheduled by the uplink scheduling grant is the non-SBFD type, the time unit type of the SRS resource indicated by the SRS resource indicator field is also the non-SBFD type, in other words, the SRS resource indicated by the SRS resource indicator field is an SRS resource in the at least one second SRS resource.

In this embodiment of this application, an example in which uplink transmission is a PUSCH is used. The terminal device receives an uplink scheduling grant from the network device, where the scheduling grant includes an SRS resource indicator field, and a time unit type of an SRS resource indicated by the SRS resource indicator field is the same as a time unit type of the PUSCH scheduled by the uplink scheduling grant. Therefore, when sending the PUSCH, the terminal device may send the PUSCH in the same manner as the foregoing SRS transmission. That is, if the SRS is transmitted in the SBFD type time unit, the terminal device may also send the PUSCH in the SBFD type time unit.

In the solution provided in this embodiment of this application, the uplink scheduling grant from the network device to the terminal device includes the SRS resource indicator field, and the time unit type of the SRS resource indicated by the SRS resource indicator field is the same as the time unit type of the uplink transmission scheduled by the uplink scheduling grant. After receiving the uplink scheduling grant, the terminal device can send the uplink transmission in the same manner as the foregoing SRS transmission. This can improve uplink transmission performance and improve SRS measurement efficiency.

**Manner 2**

Optionally, in some embodiments, the method 600 further includes:

The network device sends an uplink scheduling grant to the terminal device, where the uplink scheduling grant includes an SRS resource set indicator field, a type of an SRS resource set indicated by the SRS resource set indicator field is the same as a time unit type of uplink transmission scheduled by the uplink scheduling grant, and the type of the SRS resource set includes a type of the first SRS resource set and a type of the second SRS resource set.

Correspondingly, the terminal device receives the uplink scheduling grant.

Specifically, if the time unit type of the uplink transmission scheduled by the uplink scheduling grant is the SBFD type, the type of the SRS resource set indicated by the SRS resource set indicator field is also the SBFD type, in other words, the SRS resource set indicated by the SRS resource set indicator field is an SRS resource set in the X first SRS resource sets; or if the time unit type of the uplink transmission scheduled by the uplink scheduling grant is the non-SBFD type, the type of the SRS resource set indicated by the SRS resource set indicator field is also the non-SBFD type, in other words, the SRS resource set indicated by the SRS resource set indicator field is an SRS resource set in the Y second SRS resource sets.

In this embodiment of this application, an example in which uplink transmission is a PUSCH is used. The terminal device receives an uplink scheduling grant from the network device, where the scheduling grant includes an SRS resource set indicator field, and a type of an SRS resource set indicated by the SRS resource set indicator field is the same as a time unit type of uplink transmission scheduled by the uplink scheduling grant. Therefore, when sending the PUSCH, the terminal device may send the PUSCH in the same manner as the foregoing SRS transmission in the type of the SRS resource set. For example, the terminal device sends the PUSCH through a same spatial domain filter (spatial domain filter) as that for sending the SRS.

In the solution provided in this embodiment of this application, the uplink scheduling grant from the network device to the terminal device includes the SRS resource set indicator field, and the type of the SRS resource set indicated by the SRS resource set indicator field is the same as the time unit type of the uplink transmission scheduled by the uplink scheduling grant. After receiving the uplink scheduling grant, the terminal device can send the uplink transmission in the same manner as the SRS transmission in the SRS resource set indicated by the SRS resource set indicator field. This can improve transmission performance of the uplink transmission.

**Manner 3**

Optionally, in some embodiments, the method 600 further includes:

The network device sends an uplink scheduling grant to the terminal device, where the uplink scheduling grant includes an SRS resource set indicator field, a type of an SRS resource set indicated by the SRS resource set indicator field is determined based on a first indicator field included in the uplink scheduling grant, and the first indicator field indicates that the SRS resource set indicated by the SRS resource set indicator field is an SRS resource set in the X first SRS resource sets or an SRS resource set in the Y second SRS resource sets.

Correspondingly, the terminal device receives the uplink scheduling grant.

The first indicator field in this embodiment of this application may be a new indicator field, and may be introduced by using DCI.

Specifically, if the first indicator field included in the uplink scheduling grant indicates that the type of the SRS resource set indicated by the SRS resource set indicator field is the SBFD type, the SRS resource set indicated by the SRS resource set indicator field is an SRS resource set in the X first SRS resource sets; or if the first indicator field included in the uplink scheduling grant indicates that the SRS resource set indicated by the SRS resource set indicator field is the non-SBFD type, the SRS resource set indicated by the SRS resource set indicator field is an SRS resource set in the Y second SRS resource sets.

In the solution provided in this embodiment of this application, the uplink scheduling grant from the network device to the terminal device includes the SRS resource set indicator field, and the type of the SRS resource set indicated by the SRS resource set indicator field is determined based on the first indicator field included in the uplink scheduling grant. After receiving the uplink scheduling grant, the terminal device can send the uplink transmission in the same manner as the SRS transmission in the SRS resource set indicated by the SRS resource set indicator field. This can improve transmission performance of the uplink transmission.

**Manner 4**

Optionally, in some embodiments, the method 600 further includes:

The network device sends an uplink scheduling grant to the terminal device, where the uplink scheduling grant includes an SRS resource set indicator field, the SRS resource set indicator field indicates a type of an SRS resource set and an SRS resource set included in the indicated type of the SRS resource set, and the type of the SRS resource set includes a type of the first SRS resource set and a type of the second SRS resource set.

Correspondingly, the terminal device receives the uplink scheduling grant.

In this embodiment of this application, the SRS resource set indicator field included in the uplink scheduling grant may indicate the type of the SRS resource set. For example, the SRS resource set indicator field may indicate that the type of the SRS resource set is the type of the first SRS resource set, and the SRS resource set indicator field may indicate that the type of the SRS resource set is the type of the second SRS resource set. In other words, the SRS resource set indicator field may indicate that the indicated SRS resource set is the SRS resource set in the first SRS resource set, or the SRS resource set indicator field may indicate that the indicated SRS resource set is the SRS resource set in the second SRS resource set.

In addition, the SRS resource set indicator field included in the uplink scheduling grant may further indicate the SRS resource set included in the indicated type of the SRS resource set. For example, it is assumed that the SRS resource set indicator field may indicate that the type of the SRS resource set is the type of the first SRS resource set, and the first SRS resource set includes five first SRS resource sets: a first SRS resource set 1, a first SRS resource set 2, a first SRS resource set 3, a first SRS resource set 4, and a first SRS resource set 5. In this case, the SRS resource set indicator field may further indicate a first SRS resource set specifically included or used in the type of the first SRS resource set, for example, some or all of the five first SRS resource sets: the first SRS resource set 1, the first SRS resource set 2, the first SRS resource set 3, the first SRS resource set 4, and the first SRS resource set 5.

For example, it is assumed that the SRS resource set indicator field may indicate that the type of the SRS resource set is the type of the second SRS resource set, and the second SRS resource set includes five second SRS resource sets: a second SRS resource set 1, a second SRS resource set 2, a second SRS resource set 3, a second SRS resource set 4, and a second SRS resource set 5. In this case, the SRS resource set indicator field may further indicate a second SRS resource set specifically included or used in the type of the second SRS resource set, for example, some or all of the five second SRS resource sets: the second SRS resource set 1, the second SRS resource set 2, the second SRS resource set 3, the second SRS resource set 4, and the second SRS resource set 5.

In the solution provided in this embodiment of this application, the uplink scheduling grant from the network device to the terminal device includes the SRS resource set indicator field, and the SRS resource set indicator field indicates the type of the SRS resource set and the SRS resource set included in the indicated type of the SRS resource set. After receiving the uplink scheduling grant, the terminal device can send the uplink transmission in the same manner as the SRS transmission in the type of the SRS resource set indicated by the SRS resource set indicator field and in the SRS resource set included in the type of the SRS resource set. This can improve transmission performance of the uplink transmission.

It should be understood that, in this embodiment of this application, one SRS resource may define one SRS signal, that is, the SRS resource may represent the SRS signal. For example, that the terminal device sends the uplink transmission in the same manner as the SRS transmission in the SRS resource set indicated by the SRS resource set indicator field may be understood as: The terminal device sends the uplink transmission in the same manner as the SRS transmission corresponding to the SRS resource in the SRS resource set indicated by the SRS resource set indicator field.

Optionally, in some embodiments, a length of the SRS resource set indicator field is determined based on a larger value between X and Y.

In this embodiment of this application, if both X and Y are 1, the length of the resource set indicator field is n1 bits; or if at least one of X and Y is greater than or equal to 2, the length of the resource set indicator field is greater than or equal to n2 bits, where n2 is greater than n1.

For Manner 1 and Manner 2, the length of the SRS resource set indicator field may be 0 bits or 2 bits. An example in which uplink transmission scheduled by an uplink scheduling grant is a PUSCH is used below for description.

It should be noted that, for a scenario in which a value of either X or Y is 0, that is, a network configures only an SRS resource set used for an SBFD type or a non-SBFD type, the SRS resource set indicator field is associated with the configured type of the SRS resource set by default. For a value and a meaning of the field, refer to the conventional technology. The following focuses on the scenario where both X and Y are greater than 0.

(1) When values of X and Y are both 1, the length of the SRS resource set indicator field may be 0 bits, that is, the SRS resource set indicator field may not be required to indicate the type of the SRS resource set. For the UE, the UE may use, by default, an SRS resource set whose type is the same as a scheduling type of a time unit of uplink transmission scheduled by the uplink scheduling grant.

For example, if a time unit type of a PUSCH scheduled by a PUSCH scheduling grant is the SBFD type, the UE may consider by default that the type of the SRS resource set associated with the SRS resource set indicator field is also the SBFD type, so that the UE can transmit the SRS on an SRS resource in the SRS resource set of the SBFD type time unit; or if a time unit type of a PUSCH scheduled by a PUSCH scheduling grant is the non-SBFD type, the UE may consider by default that the type of the SRS resource set associated with the SRS resource set indicator field is also the non-SBFD type, so that the UE can transmit the SRS on an SRS resource in the SRS resource set of the non-SBFD type time unit.

(2) When a value of at least one of X and Y is 2, the length of the SRS resource set indicator field may be 2 bits. For example, it is assumed that X=1 and Y=2. If a time unit type of a PUSCH scheduled by a PUSCH scheduling grant is the SBFD type, because there is one SRS resource set used for the SBFD type time unit, the UE may ignore the indicated by the SRS resource set indicator field, and use the SRS resource set by default; or if a time unit type of a PUSCH scheduled by a PUSCH scheduling grant is the non-SBFD type, because there are two SRS resource sets used for the non-SBFD type time unit, the UE may determine an SRS resource set in the two SRS resource sets based on the value of the SRS resource set indicator field. For details, refer to Table 2.

The length of the SRS resource set indicator field is 2 bits, and may include the following forms: for example, "00", "01", "10", and "11", where "00" may correspond to the index "0" in Table 2, "01" may correspond to the index "1" in Table 2, "10" may correspond to the index "2" in Table 2, and "11" may correspond to the index "3" in Table 2. However, it should be understood that the foregoing corresponding manner is merely an example, and there may alternatively be another corresponding manner. This should not constitute a special limitation on this application.

In other words, if the value of the SRS resource set indicator field is "00", the UE may determine, based on Table 2, that the SRS resource set indicator field and a precoding information and quantity of layers field in the SRS resource set indicator field are associated with the first SRS resource set. A second SRS resource set indicator field and a second precoding information field are reserved.

For X=2 and Y=1, if the time unit type of the PUSCH scheduled by the PUSCH scheduling grant is the non-SBFD type, because there is one SRS resource set used for the non-SBFD type time unit, the UE may ignore the indicator field, and use the SRS resource set by default; or if the time unit type of the PUSCH scheduled by the PUSCH scheduling grant is the SBFD type, because there are two SRS resource sets used for the SBFD type time unit, the UE may determine an SRS resource set in the two SRS resource sets based on the value of the SRS resource set indicator field. Details are similar to the foregoing case in which X=1 and Y=2, and details are not described again.

(3) When values of X and Y are both 2, the UE determines, based on the value of the SRS resource set indicator field, an SRS resource set that is in the X SRS resource sets or the Y SRS resource sets and that is of the same type as the PUSCH scheduled by the PUSCH scheduling grant.

For example, if the time unit type of the PUSCH scheduled by the PUSCH scheduling grant is the SBFD type, because there are two SRS resource sets used for the SBFD type time unit, the UE may determine an SRS resource set in the two SRS resource sets based on the value of the SRS resource set indicator field. For details, refer to the related content of X=2. Details are not described again.

If the time unit type of the PUSCH scheduled by the PUSCH scheduling grant is the non-SBFD type, because there are two SRS resource sets used for the non-SBFD type time unit, the UE may determine an SRS resource set in the two SRS resource sets based on the value of the SRS resource set indicator field. For details, refer to the related content of Y=2. Details are not described again.

For Manner 3, a length of the first indicator field may be 1 bit, and the 1 bit indicates the type of the SRS resource set indicated by the SRS resource set indicator field. That is, the 1 bit indicates whether the SRS resource set indicated by the SRS resource set indicator field is an SRS resource set used for the SBFD type time unit or an SRS resource set used for the non-SBFD type time unit. The length of the SRS resource set indicator field may be 0 bits or 2 bits. An example in which the uplink transmission scheduled by the uplink scheduling grant is a PUSCH is used below for description.

(1) When values of X and Y are both 1, the length of the first indicator field may be 1 bit, and the 1 bit indicates the type of the indicated SRS resource set. That is, the 1 bit indicates whether the SRS resource set indicated by the SRS resource set indicator field is one SRS resource set used for the SBFD type time unit or one SRS resource set used for the non-SBFD type time unit. After determining the type of the SRS resource set, the UE may use the indicated SRS resource set by default.

(2) When a value of at least one of X and Y is 2, the length of the first indicator field may be 1 bit, and the 1 bit indicates the type of the indicated SRS resource set. That is, the 1 bit indicates whether the SRS resource set indicated by the SRS resource set indicator field is an SRS resource set used for the SBFD type time unit or an SRS resource set used for the non-SBFD type time unit. The length of the SRS resource set indicator field may be 2 bits, and the 2 bits may be used for determining, based on the type of the indicated SRS resource set, the corresponding SRS resource set to be used. For specific content, refer to related content in Manner 1. Details are not described again.

For Manner 4, the length of the SRS resource set indicator field may be 1 bit or 3 bits. An example in which the uplink transmission scheduled by the uplink scheduling grant is a PUSCH is used below for description.

(1) When values of X and Y are both 1, the length of the SRS resource set indicator field may be 1 bit, and the 1 bit indicates the type of the associated SRS resource set. That is, the 1 bit indicates whether the SRS resource set associated with the SRS resource set indicator field is one SRS resource set used for the SBFD type time unit or one SRS resource set used for the non-SBFD type time unit. After determining the type of the SRS resource set, the UE may use the determined SRS resource set by default.

It is assumed that 1 bit indicates that the SRS resource set associated with the SRS resource set indicator field is one SRS resource set used for the SBFD type time unit, the UE determines that the SRS resource set associated with the SRS resource set indicator field is the SRS resource set used for the SBFD type time unit.

It is assumed that 1 bit indicates that the SRS resource set associated with the SRS resource set indicator field is one SRS resource set used for the SBFD type time unit, the UE determines that the SRS resource set associated with the SRS resource set indicator field is the SRS resource set used for the non-SBFD type time unit.

(2) When a value of at least one of X and Y is 2, the length of the SRS resource set indicator field may be 3 bits, and one of the 3 bits may indicate the type of the associated SRS resource set. That is, the 1 bit indicates whether the SRS resource set associated with the SRS resource set indicator field is one SRS resource set used for the SBFD type time unit or one SRS resource set used for the non-SBFD type time unit. The remaining 2 bits may be used for determining, based on the type of the determined SRS resource set, the corresponding SRS resource set to be used.

For example, it is assumed that X=1 and Y=2, if the most significant 1 bit indicates that the type of the associated SRS resource set is one SRS resource set used for the SBFD type time unit, the UE may ignore the indicator field, and use the associated SRS resource set indicated by the most significant 1 bit by default; or if the most significant 1 bit indicates that the type of the associated SRS resource set is two SRS resource sets used for the non-SBFD type time unit, the UE may determine an SRS resource set in the two SRS resource sets based on a value of the SRS resource set indicator field indicated by the remaining 2 bits. For specific content, refer to related content in Manner 1. Details are not described again.

For another example, it is assumed that X=2 and Y=1, if the most significant 1 bit indicates that the type of the associated SRS resource set is one SRS resource set used for the non-SBFD type time unit, the UE may ignore the indicator field, and use the associated SRS resource set indicated by the most significant 1 bit by default; or if the most significant 1 bit indicates that the type of the associated SRS resource set is two SRS resource sets used for the SBFD type time unit, the UE may determine an SRS resource set in the two SRS resource sets based on a value of the SRS resource set indicator field indicated by the remaining 2 bits. For specific content, refer to related content in Manner 1. Details are not described again.

It should be understood that, in the foregoing examples, the most significant 1 bit indicates the associated SRS resource set. In some implementations, any one of the bits may indicate the associated SRS resource set. This is not limited.

In the solution provided in this embodiment of this application, the length of the SRS resource set indicator field is determined based on the larger value between X and Y. This can further improve SRS transmission performance.

In this embodiment of this application, for the SRS resource indicator field and the second SRS resource indicator field in the PUSCH scheduling grant, bit lengths of the SRS resource indicator field and the second SRS resource indicator field may be determined based on a quantity of SRS resources configured in the SRS resource set determined based on the SRS resource set indicator field, or may be determined based on a quantity of SRS resources configured in an SRS resource set whose usage is "codebook" or "non-codebook" and that is configured through RRC.

(1) For the SRS resource indicator field

If a higher layer parameter txConfig is configured as non-codebook, the bit length is $log_2\left(\sum_{k=1}^{min(L_{max},N_{SRS1})} \binom{N_{SRS1}}{k}\right)$.

$N_{SRS1}$ is a quantity of SRS resources configured in the SRS resource set indicator field determined based on the SRS resource set indicator field (if any), or a quantity of SRS resources configured in the SRS resource set whose usage is "non-codebook" and that is configured through RRC; $L_{max}$ is a quantity of layers of PUSCH transmission supported by the UE; and $k$ is an index value.

If the higher layer parameter txConfig is configured as codebook, the bit length is $log_2(N_{SRS1})$.

(2) For the second SRS resource indicator field

If the higher layer parameter txConfig is configured as non-codebook and the SRS resource set indicator field exists, the bit length is $log_2\left(\max_{1,2,\cdots min(L_{max},N_{SRS})} \binom{N_{SRS2}}{k}\right)$.

If the length of the SRS resource set indicator field is not 0 bits, $N_{SRS2}$ is the quantity of SRS resources configured in the SRS resource set whose usage is "non-codebook" and that is determined based on the SRS resource set indicator field.

If the higher layer parameter txConfig is configured as codebook and the SRS resource set indicator field exists, the bit length is $log_2(N_{SRS3})$.

If the length of the SRS resource set indicator field is not 0 bits, $N_{SRS3}$ is a quantity of SRS resources configured in the SRS resource set whose usage is "codebook" and that is determined based on the SRS resource set indicator field.

Otherwise, if the length of the SRS resource set indicator field is 0 bits, for $N_{SRS2}$ and $N_{SRS3}$, refer to related content in Manner 2 or Manner 3 in which the length of the resource set indicator field is 0.

Optionally, in some embodiments, for an SRS resource in the at least one first SRS resource and/or the at least one second SRS resource, a time unit type of a reference signal associated with the SRS resource is the same as a time unit type of the SRS resource, and the time unit type includes the SBFD type and the non-SBFD type.

In this embodiment of this application, if the time unit type of the SRS resource is the SBFD type, the time unit type of the reference signal associated with the SRS resource is also the SBFD type. If the time unit type of the SRS resource is the non-SBFD type, the time unit type of the reference signal associated with the SRS resource is also the non-SBFD type.

Optionally, in some embodiments, the reference signal includes at least one of the following:
a CSI-RS, an SSB, an SRS other than the SRS, and a downlink positioning reference signal (downlink positioning reference signal, DL PRS).

FIG. 7 is a diagram of a time unit type of an SRS resource and a time unit type of a reference signal associated with the SRS resource according to an embodiment of this application.

It can be learned from the figure that the time unit type of the SRS resource is spatially associated with the time unit type of the reference signal (for example, a CSI-RS, an SSB, another SRS, or a DL-PRS) associated with the SRS resource. To be specific, if the time unit type of the SRS resource is an SBFD type, the reference signal associated with the SRS resource is also the SBFD type; or if the time unit type of the SRS resource is a non-SBFD type, the reference signal associated with the SRS resource is also the non-SBFD type.

If the time unit type of the SRS resource is spatially associated with another SRS, the UE may send an SRS through a same spatial domain transmission (spatial domain transmission) filter used for transmission of the another SRS. For example, it is assumed that a time unit type of an SRS 1 resource is spatially associated with an SRS 2, when sending the SRS 1, UE may send the SRS 1 through a same spatial domain transmission filter as that used for transmission of the SRS 2. The another SRS (that is, the SRS 2) may be periodic, semi-persistent, or aperiodic.

If the time unit type of the SRS resource is spatially associated with a signal in the CSI-RS, the SSB, and the DL-PRS, the UE can send the SRS through a same spatial domain transmission filter used for receiving the CSI-RS, the SSB, or the DL PRS transmission. For example, it is assumed that the time unit type of the SRS resource is spatially associated with the CSI-RS, when sending the SRS, the UE may send the SRS through a same spatial domain transmission filter as that used for CSI-RS transmission. The CSI-RS may be periodic, semi-persistent, or aperiodic. Particularly, for an aperiodic CSI-RS, a recently received CSI-RS may be used.

In the solution provided in this embodiment of this application, for the SRS resource in the at least one first SRS resource and/or the at least one second SRS resource, the time unit type of the reference signal associated with the SRS resource is the same as the time unit type of the SRS resource, that is, an SRS transmitted on a same type of time domain resource is spatially associated with another reference signal (for example, a CSI-RS, an SSB, another SRS, or a DL-PRS). This helps enhance and improve SRS transmission performance, and further, this can also improve transmission performance of a channel or a signal based on the SRS transmission.

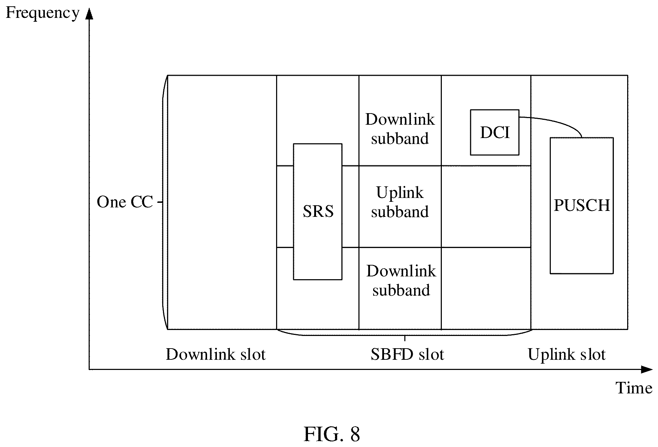

In addition, because a downlink subband and an uplink subband are introduced into an SBFD slot, cross-link interference occurs between a downlink signal on the downlink subband and an uplink signal on the uplink subband. Therefore, link quality in the SBFD slot/symbol is different from that in a non-SBFD slot/symbol. As a result, link quality of the SRS does not match link quality of an associated channel. For example, as shown in FIG. 8, an example in which an SRS is used for codebook-based PUSCH transmission or non-codebook-based PUSCH transmission is used. If the SRS is transmitted in an SBFD slot/symbol, a scheduled PUSCH is transmitted in an uplink slot, and latest transmission of an SRS resource indicated by an SRI field in DCI for scheduling the PUSCH is sent in a slot before the DCI, that is, the link quality of the SRS is quality of the SBFD slot, but the link quality of the channel associated with the link quality of the SRS is a link in the non-SBFD slot/symbol. As a result, the link quality of the SRS does not match the link quality of the associated channel.

To resolve this problem, an embodiment of this application provides another communication method 900. The method 900 may be performed by a network device and a terminal device, and the method 900 may include steps S910 to S940.

S910: Send an uplink scheduling grant to the terminal device, where the uplink scheduling grant includes a sounding reference signal SRS resource indicator field, a time unit type of an SRS resource indicated by the SRS resource indicator field is the same as a time unit type of uplink transmission scheduled by the uplink scheduling grant, and the time unit type includes a subband full duplex SBFD type and a non-SBFD type.

Specifically, if the time unit type of the uplink transmission scheduled by the uplink scheduling grant is the SBFD type, the time unit type of the SRS resource indicated by the SRS resource indicator field is also the SBFD type; or if the time unit type of the uplink transmission scheduled by the uplink scheduling grant is the non-SBFD type, the time unit type of the SRS resource indicated by the SRS resource indicator field is also the non-SBFD type.

S920: Receive the uplink scheduling grant from the network device.

S930: Send the uplink transmission to the network device based on the SRS resource indicator field.

In this embodiment of this application, an example in which the uplink transmission is a PUSCH is used. The terminal device receives an uplink scheduling grant from the network device, where the scheduling grant includes an SRS resource indicator field, and a time unit type of an SRS resource indicated by the SRS resource indicator field is the same as a time unit type of the PUSCH scheduled by the uplink scheduling grant. Therefore, when sending the PUSCH, the terminal device may send the PUSCH in the same manner as the foregoing SRS transmission. That is, if the SRS is transmitted in the SBFD type time unit, the terminal device may also send the PUSCH in the SBFD type time unit; or if the SRS is transmitted in a non-SBFD type time unit, the terminal device may also send the PUSCH in the non-SBFD type time unit.

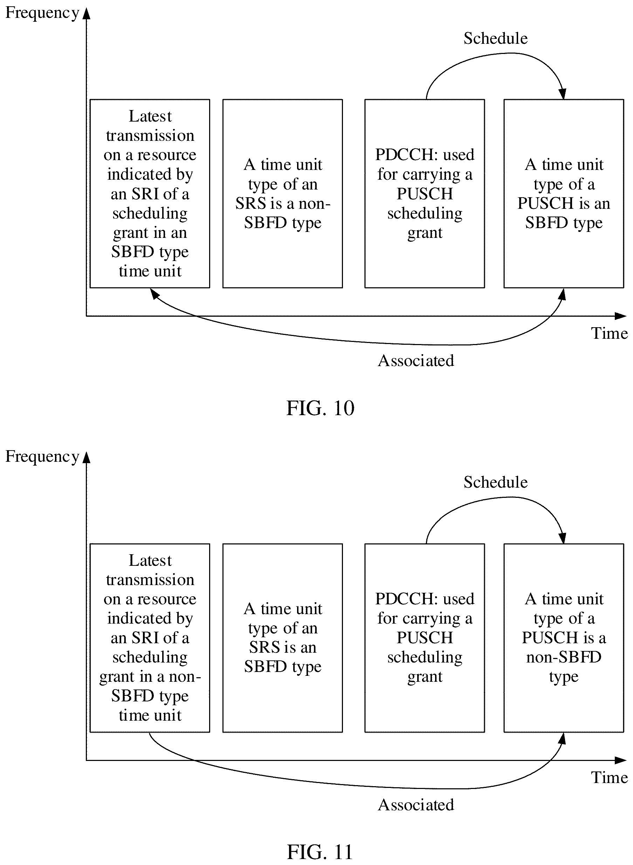

FIG. 10 is a diagram of a time unit type of an SRS resource and a time unit type of a PSUCH according to an embodiment of this application.

Refer to FIG. 10. The time unit type of the PUSCH scheduled by an uplink scheduling grant is an SBFD type, and is associated with latest transmission on a resource indicated by an SRI of the scheduling grant in an SBFD type time unit.

FIG. 11 is a another diagram of a time unit type of an SRS resource and a time unit type of a PSUCH according to an embodiment of this application.

Refer to FIG. 11. The time unit type of the PUSCH scheduled by an uplink scheduling grant is a non-SBFD type, and is associated with latest transmission on a resource indicated by an SRI of the scheduling grant in a non-SBFD type time unit.

In this embodiment of this application, the UE sends the PUSCH in the same manner as the foregoing SRS transmission, where the PUSCH is sent in the same manner as the foregoing SRS transmission, it may be considered that the PUSCH is sent through a beam, an antenna port, a precoder, or the like that is the same as a beam, an antenna port, or a precoder for sending the SRS.

For codebook-based PUSCH transmission, in this case, the UE may send the PUSCH through an antenna port that is the same as an SRS port of the SRS resource.

For non-codebook-based PUSCH transmission, in this case, the UE may perform one-to-one mapping between indicated SRIs and indicated DM-RS ports and corresponding PUSCH layers {0, ..., $v$-1}, and can send the PUSCH through the same antenna port as the SRS port of the SRS resource described above.

S940: Receive the uplink transmission from the terminal device based on the SRS resource indicator field.

The network device may receive, based on the SRS resource indicator field, the PUSCH from the terminal device. Specifically, if the terminal device sends the PUSCH in the SBFD type time unit, correspondingly, the network device may receive the PUSCH in the SBFD type time unit. If the terminal device sends the PUSCH in the non-SBFD type time unit, correspondingly, the network device may receive the PUSCH in the non-SBFD type time unit.

In the solution provided in this embodiment of this application, the uplink scheduling grant from the network device to the terminal device includes the SRS resource indicator field, and the time unit type of the SRS resource indicated by the SRS resource indicator field is the same as the time unit type of the uplink transmission scheduled by the uplink scheduling grant. After receiving the uplink scheduling grant, the terminal device can send the uplink transmission in the same manner as the foregoing SRS transmission. This can ensure that link quality of the uplink transmission is similar to that of the associated SRS, improve transmission performance of the uplink transmission, and improve SRS measurement efficiency.

An embodiment of this application provides still another communication method 1200. The method 1200 may be performed by a network device and a terminal device, and the method 1200 may include steps S1210 to S1240.

S1210: Send second indication information to the terminal device, where a time unit type that is indicated by the second indication information and that is of a reference signal associated with an SRS resource is the same as a type time unit of the SRS resource, and the time unit type includes an SBFD type and a non-SBFD type.

S1220: Receive the second indication information from the terminal.

S 1230: Send, to the network device based on the second indication information, an SRS corresponding to the SRS resource.

S1240: Receive, from the terminal device based on the second indication information, the SRS corresponding to the SRS resource.

In this embodiment of this application, that the time unit type of the reference signal associated with the SRS resource is the same as the type time unit of the SRS resource may be predefined, may be preconfigured, or may be indicated by the second indication information. This is not limited.

Optionally, in some embodiments, the reference signal includes at least one of the following:
a channel state information reference signal CSI-RS, a synchronization signal/physical broadcast channel block SSB, an SRS other than the SRS, and a downlink positioning reference signal DL PRS.

For specific content, refer to related content in the method 600. Details are not described herein again.

In the solution provided in this embodiment of this application, the time unit type that is indicated by the second indication information from the network device to the terminal device and that is of the reference signal associated with the SRS resource is the same as the type time unit of the SRS resource, that is, spatial association is performed between an SRS transmitted on a time domain resource of a same type and a reference signal associated with the SRS resource, and spatial association can be performed on reference signals with same or similar link quality. This helps enhance and improve SRS transmission performance, and further, this can also improve transmission performance of a channel or a signal based on the SRS transmission.

It should be understood that specific examples in the foregoing embodiments are merely intended to help a person skilled in the art better understand embodiments of this application, but are not intended to limit the scope of embodiments of this application. It should be understood that sequence numbers of the foregoing processes do not mean a sequence of performing the processes. The sequence of performing the processes should be determined according to functions and internal logic of the processes, and should not be construed as any limitation on the implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, a method and an operation implemented by a device (for example, the terminal device or the network device) may alternatively be implemented by a component (for example, a chip or a circuit) that can be used in a device.

The foregoing describes in detail the communication method provided in embodiments of this application. The foregoing communication method is mainly described from a perspective of interaction between the terminal device and the network device. It may be understood that, to implement the foregoing functions, the terminal device and the network device include corresponding hardware structures and/or software modules for performing the functions.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

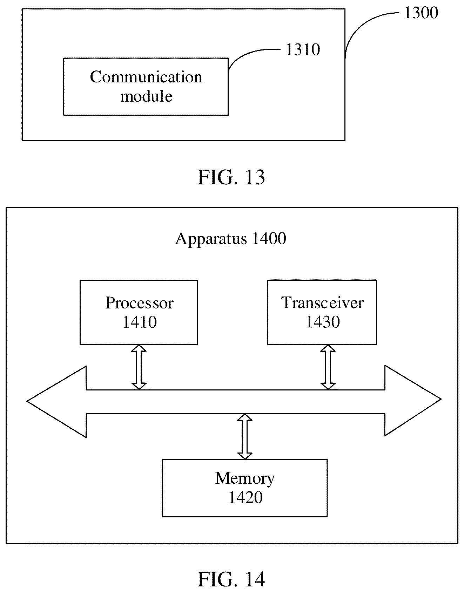

The following describes a communication apparatus provided in embodiments of this application with reference to FIG. 13 and FIG. 14. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmit end device or a receive end device may be divided based on the foregoing method examples. For example, functional modules may be divided based on functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 13 is a block diagram of a communication apparatus 1300 according to an embodiment of this application. The apparatus 1300 includes a transceiver module 1310. The transceiver module 1310 may implement a corresponding communication function. The transceiver module 1310 may also be referred to as a communication interface or a communication module.

Optionally, the apparatus 1300 may further include a processing module, and the processing module may be configured to process data.

Optionally, the apparatus 1300 may further include a storage module. The storage module may be configured to store instructions and/or data. The processing module may read the instructions and/or the data in the storage module, so that the apparatus implements the foregoing method embodiments.

The apparatus 1300 may be configured to perform an action performed by the network device in the foregoing method embodiments, and the transceiver module 1310 is configured to perform a sending/receiving-related operation on the network device side in the foregoing method embodiments. The apparatus 1300 may be configured to perform an action performed by the terminal device in the foregoing method embodiments, and the transceiver module 1310 is configured to perform a sending/receiving-related operation on the terminal device side in the foregoing method embodiments.

When the apparatus 1300 is configured to implement a function of the network device in the method embodiment in FIG. 6, the transceiver module 1310 is configured to: send configuration information to a terminal device, where the configuration information indicates M sounding reference signal SRS resource sets, a usage of the M SRS resource sets includes one of antenna selection, codebook-based uplink transmission, non-codebook-based uplink transmission, beam management, and positioning, the M SRS resource sets include X first SRS resource sets and Y second SRS resource sets, the X first SRS resource sets include at least one first SRS resource, the Y second SRS resource sets include at least one second SRS resource, a time domain resource corresponding to the at least one first SRS resource is a subband full duplex SBFD type time unit, a time domain resource corresponding to the at least one second SRS resource is a non-SBFD type time unit, M is an integer greater than or equal to 1, and both X and Y are integers greater than or equal to 0; and receive an SRS from the terminal device based on the configuration information.

When the apparatus 1300 is configured to implement a function of the terminal device in the method embodiment in FIG. 6, the transceiver module 1310 is configured to: receive configuration information from a network device, where the configuration information indicates M sounding reference signal SRS resource sets, a usage of the M SRS resource sets includes one of antenna selection, codebook-based uplink transmission, non-codebook-based uplink transmission, beam management, and positioning, the M SRS resource sets include X first SRS resource sets and Y second SRS resource sets, the X first SRS resource sets include at least one first SRS resource, the Y second SRS resource sets include at least one second SRS resource, a time domain resource corresponding to the at least one first SRS resource is a subband full duplex SBFD type time unit, a time domain resource corresponding to the at least one second SRS resource is a non-SBFD type time unit, M is an integer greater than or equal to 1, and both X and Y are integers greater than or equal to 0; and send an SRS to the network device based on the configuration information.

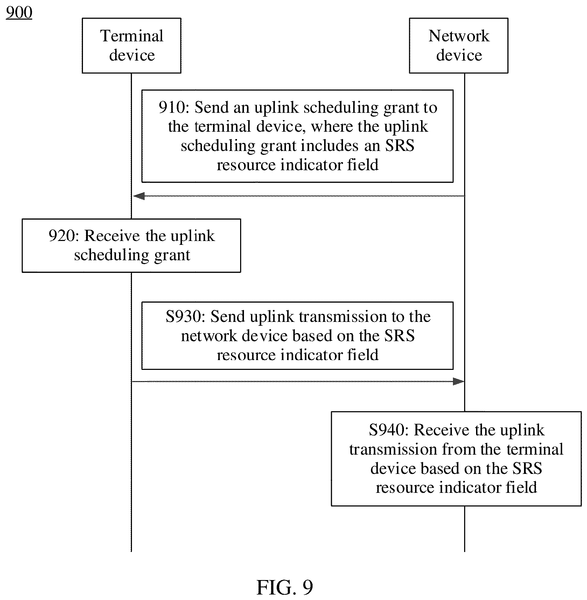

When the apparatus 1300 is configured to implement a function of the network device in the method embodiment in FIG. 9, the transceiver module 1310 is configured to: send an uplink scheduling grant to a terminal device, where the uplink scheduling grant includes a sounding reference signal SRS resource indicator field, a time unit type of an SRS resource indicated by the SRS resource indicator field is the same as a time unit type of uplink transmission scheduled by the uplink scheduling grant, and the time unit type includes a subband full duplex SBFD type and a non-SBFD type; and receive the uplink transmission from the terminal device based on the SRS resource indicator field.

When the apparatus 1300 is configured to implement a function of the terminal device in the method embodiment in FIG. 9, the transceiver module 1310 is configured to: receive an uplink scheduling grant from a network device, where the uplink scheduling grant includes a sounding reference signal SRS resource indicator field, a time unit type of an SRS resource indicated by the SRS resource indicator field is the same as a time unit type of uplink transmission scheduled by the uplink scheduling grant, and the time unit type includes a subband full duplex SBFD type and a non-SBFD type; and send the uplink transmission to the network device based on the SRS resource indicator field.

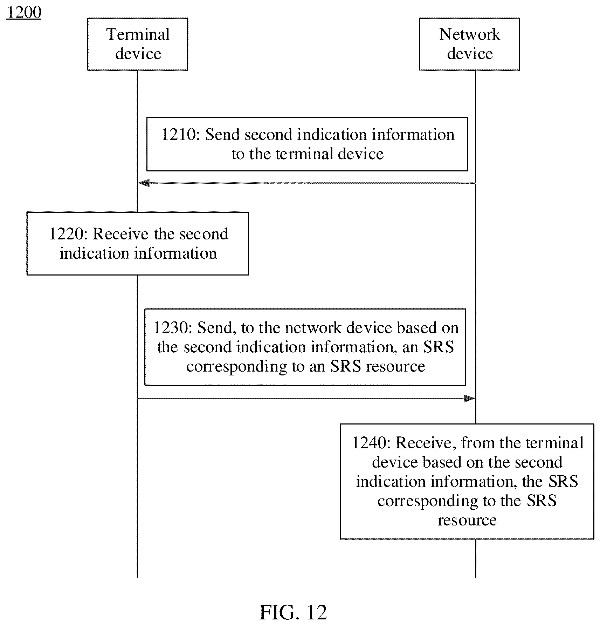

When the apparatus 1300 is configured to implement a function of the network device in the method embodiment in FIG. 12, the transceiver module 1310 is configured to: send second indication information to a terminal device, where a time unit type that is indicated by the second indication information and that is of a reference signal associated with an SRS resource is the same as a type time unit of the SRS resource, and the time unit type includes a subband full duplex SBFD type and a non-SBFD type; and receive, from the terminal device based on the second indication information, an SRS corresponding to the SRS resource.

When the apparatus 1300 is configured to implement a function of the terminal device in the method embodiment in FIG. 12, the transceiver module 1310 is configured to: receive second indication information from a terminal, where a time unit type that is indicated by the second indication information and that is of a reference signal associated with a sounding reference signal SRS resource is the same as a type time unit of the SRS resource, and the time unit type includes a subband full duplex SBFD type and a non-SBFD type; and send, to a network device based on the second indication information, an SRS corresponding to the SRS resource.

The apparatus 1300 may implement the steps or the procedures performed by the terminal device in the method embodiments according to embodiments of this application. The apparatus 1300 may include modules configured to perform the method performed by the terminal device in the method embodiments. In addition, the modules in the apparatus 1300 and the foregoing other operations and/or functions are separately used to implement corresponding procedures of the method embodiment of the terminal device in the method embodiments.

The apparatus 1300 may implement the steps or procedures performed by the network device in the method embodiments according to embodiments of this application. The apparatus 1300 may include the modules configured to perform the methods performed by the network device in the method embodiments. In addition, the modules in the apparatus 1300 and the foregoing other operations and/or functions are separately used to implement corresponding procedures of the method embodiment of the network device in the method embodiments.

It should be understood that a specific process in which the modules perform the foregoing corresponding steps is described in detail in the foregoing method embodiments. For brevity, details are not described herein.

The transceiver module 1310 in the foregoing embodiments may be implemented by a transceiver or through a transceiver-related circuit. The processing module may be implemented by at least one processor or through a processor-related circuit, and the storage module may be implemented by at least one memory.

As shown in FIG. 14, an embodiment of this application further provides an apparatus 1400. The apparatus 1400 includes a processor 1410, and may further include one or more memories 1420. The processor 1410 is coupled to the memory 1420. The memory 1420 is configured to store a computer program or instructions and/or data. The processor 1410 is configured to execute the computer program or the instructions and/or the data stored in the memory 1420, so that the method in the foregoing method embodiments is performed. Optionally, the apparatus 1400 includes one or more processors 1410.

Optionally, the memory 1420 and the processor 1410 may be integrated together, or separately disposed.

Optionally, as shown in FIG. 14, the apparatus 1400 may further include a transceiver 1430. The transceiver 1430 is configured to receive and/or send a signal. For example, the processor 1410 is configured to control the transceiver 1430 to receive and/or send a signal.

In a solution, the apparatus 1400 is configured to implement operations performed by the communication devices (for example, the terminal device and the network device) in the foregoing method embodiments.

An embodiment of this application further provides a computer-readable storage medium. The computer-readable storage medium stores computer instructions for implementing the method performed by the communication device (for example, the terminal device and the network device) in the foregoing method embodiments.

For example, when a computer program is executed by a computer, the computer is enabled to implement the method performed by the communication devices (for example, the terminal device and the network device) in the foregoing method embodiments.

An embodiment of this application further provides a computer program product including instructions. When the instructions are executed by a computer, the computer is enabled to implement the methods performed by the communication devices (for example, the terminal device and the network device) in the foregoing method embodiments.

An embodiment of this application further provides a communication system. The communication system includes the terminal device and the network device in the foregoing embodiments.

For explanations and beneficial effect of related content in any one of the apparatuses provided above, refer to the corresponding method embodiment provided above. Details are not described herein again.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should be further noted that the memory described in this specification is intended to include, but is not limited to, these memories and any other memory of a suitable type.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method is applied to a network device, and the method comprises:

   sending configuration information to a terminal device, wherein the configuration information indicates M sounding reference signal SRS resource sets, a usage of the M SRS resource sets comprises one of antenna selection, codebook-based uplink transmission, non-codebook-based uplink transmission, beam management, and positioning, the M SRS resource sets comprise X first SRS resource sets and Y second SRS resource sets, the X first SRS resource sets comprise at least one first SRS resource, the Y second SRS resource sets comprise at least one second SRS resource, a time domain resource corresponding to the at least one first SRS resource is a subband full duplex SBFD type time unit, a time domain resource corresponding to the at least one second SRS resource is a non-SBFD type time unit, M is an integer greater than or equal to 1, and both X and Y are integers greater than or equal to 0; and
   receiving an SRS from the terminal device based on the configuration information.

2. The method according to claim 1, wherein X and Y are the same.

3. The method according to claim 1 or 2, wherein if X is greater than 1, each of the X first SRS resource sets comprises a same quantity of SRS resources; or

   if Y is greater than 1, each of the Y second SRS resource sets comprises a same quantity of SRS resources; or
   if M is greater than 1, each of the M SRS resource sets comprises a same quantity of SRS resources.

4. The method according to any one of claims 1 to 3, wherein the configuration information comprises first indication information, and the first indication information indicates that a time domain resource corresponding to an SRS resource comprised in the SRS resource set is the SBFD type time unit or the non-SBFD type time unit.

5. The method according to any one of claims 1 to 4, wherein the method further comprises:
   sending an uplink scheduling grant to the terminal device, wherein the uplink scheduling grant comprises an SRS resource indicator field, a time unit type of an SRS resource indicated by the SRS resource indicator field is the same as a time unit type of uplink transmission scheduled by the uplink scheduling grant, and the time unit type comprises the SBFD type and the non-SBFD type.

6. The method according to any one of claims 1 to 4, wherein the method further comprises:
   sending an uplink scheduling grant to the terminal device, wherein the uplink scheduling grant comprises an SRS resource set indicator field, a type of an SRS resource set indicated by the SRS resource set indicator field is the same as a time unit type of uplink transmission scheduled by the uplink scheduling grant, and the type of the SRS resource set comprises a type of the first SRS resource set and a type of the second SRS resource set.

7. The method according to any one of claims 1 to 4, wherein the method further comprises:
   sending an uplink scheduling grant to the terminal device, wherein the uplink scheduling grant comprises an SRS resource set indicator field, a type of an SRS resource set indicated by the SRS resource set indicator field is determined based on a first indicator field comprised in the uplink scheduling grant, and the first indicator field indicates that the SRS resource set indicated by the SRS resource set indicator field is an SRS resource set in the X first SRS resource sets or an SRS resource set in the Y second SRS resource sets.

8. The method according to any one of claims 1 to 4, wherein the method further comprises:
   sending an uplink scheduling grant to the terminal device, wherein the uplink scheduling grant comprises an SRS resource set indicator field, the SRS resource set indicator field indicates a type of an SRS resource set and an SRS resource set comprised in the indicated type of the SRS resource set, and the type of the SRS resource set comprises a type of the first SRS resource set and a type of the second SRS resource set.

9.  The method according to any one of claims 1 to 8, wherein a length of the SRS resource set indicator field is determined based on a larger value between X and Y

10.  The method according to any one of claims 1 to 9, wherein for an SRS resource in the at least one first SRS resource and/or the at least one second SRS resource, a time unit type of a reference signal associated with the SRS resource is the same as a time unit type of the SRS resource, and the time unit type comprises the SBFD type and the non-SBFD type.

11.  The method according to claim 10, wherein the reference signal comprises at least one of the following:
a channel state information reference signal CSI-RS, a synchronization signal/physical broadcast channel block SSB, an SRS other than the SRS, and a downlink positioning reference signal DL PRS.

12.  A communication method, wherein the method is applied to a terminal device, and the method comprises:

receiving configuration information from a network device, wherein the configuration information indicates M sounding reference signal SRS resource sets, a usage of the M SRS resource sets comprises one of antenna selection, codebook-based uplink transmission, non-codebook-based uplink transmission, beam management, and positioning, the M SRS resource sets comprise X first SRS resource sets and Y second SRS resource sets, the X first SRS resource sets comprise at least one first SRS resource, the Y second SRS resource sets comprise at least one second SRS resource, a time domain resource corresponding to the at least one first SRS resource is a subband full duplex SBFD type time unit, a time domain resource corresponding to the at least one second SRS resource is a non-SBFD type time unit, M is an integer greater than or equal to 1, and both X and Y are integers greater than or equal to 0; and
sending an SRS to the network device based on the configuration information.

13.  The method according to claim 12, wherein X and Y are the same.

14.  The method according to claim 12 or 13, wherein if X is greater than 1, each of the X first SRS resource sets comprises a same quantity of SRS resources; or

if Y is greater than 1, each of the Y second SRS resource sets comprises a same quantity of SRS resources; or
if M is greater than 1, each of the M SRS resource sets comprises a same quantity of SRS resources.

15.  The method according to any one of claims 12 to 14, wherein the configuration information comprises first indication information, and the first indication information indicates that a time domain resource corresponding to an SRS resource comprised in the SRS resource set is the SBFD type time unit or the non-SBFD type time unit.

16.  The method according to any one of claims 12 to 15, wherein the method further comprises:
receiving an uplink scheduling grant from the network device, wherein the uplink scheduling grant comprises an SRS resource indicator field, a time unit type of an SRS resource indicated by the SRS resource indicator field is the same as a time unit type of uplink transmission scheduled by the uplink scheduling grant, and the time unit type comprises the SBFD type and the non-SBFD type.

17.  The method according to any one of claims 12 to 15, wherein the method further comprises:
receiving an uplink scheduling grant from the network device, wherein the uplink scheduling grant comprises an SRS resource set indicator field, a type of an SRS resource set indicated by the SRS resource set indicator field is the same as a time unit type of uplink transmission scheduled by the uplink scheduling grant, and the type of the SRS resource set comprises a type of the first SRS resource set and a type of the second SRS resource set.

18.  The method according to any one of claims 12 to 15, wherein the method further comprises:
receiving an uplink scheduling grant from the network device, wherein the uplink scheduling grant comprises an SRS resource set indicator field, a type of an SRS resource set indicated by the SRS resource set indicator field is determined based on a first indicator field comprised in the uplink scheduling grant, and the first indicator field indicates that the SRS resource set indicated by the SRS resource set indicator field is an SRS resource set in the X first SRS resource sets or an SRS resource set in the Y second SRS resource sets.

19. The method according to any one of claims 12 to 15, wherein the method further comprises:
receiving an uplink scheduling grant from the network device, wherein the uplink scheduling grant comprises an SRS resource set indicator field, the SRS resource set indicator field indicates a type of an SRS resource set and an SRS resource set comprised in the indicated type of the SRS resource set, and the type of the SRS resource set comprises a type of the first SRS resource set and a type of the second SRS resource set.

20. The method according to any one of claims 12 to 19, wherein a length of the SRS resource set indicator field is determined based on a larger value between X and Y

21. The method according to any one of claims 12 to 20, wherein for an SRS resource in the at least one first SRS resource and/or the at least one second SRS resource, a time unit type of a reference signal associated with the SRS resource is the same as a time unit type of the SRS resource, and the time unit type comprises the SBFD type and the non-SBFD type.

22. The method according to claim 21, wherein the reference signal comprises at least one of the following:
a channel state information reference signal CSI-RS, a synchronization signal/physical broadcast channel block SSB, an SRS other than the SRS, and a downlink positioning reference signal DL PRS.

23. A communication method, wherein the method is applied to a network device, and the method comprises:

sending an uplink scheduling grant to a terminal device, wherein the uplink scheduling grant comprises a sounding reference signal SRS resource indicator field, a time unit type of an SRS resource indicated by the SRS resource indicator field is the same as a time unit type of uplink transmission scheduled by the uplink scheduling grant, and the time unit type comprises a subband full duplex SBFD type and a non-SBFD type; and
receiving the uplink transmission from the terminal device based on the SRS resource indicator field.

24. A communication method, wherein the method is applied to a terminal device, and the method comprises:

receiving an uplink scheduling grant from a network device, wherein the uplink scheduling grant comprises a sounding reference signal SRS resource indicator field, a time unit type of an SRS resource indicated by the SRS resource indicator field is the same as a time unit type of uplink transmission scheduled by the uplink scheduling grant, and the time unit type comprises a subband full duplex SBFD type and a non-SBFD type; and
sending the uplink transmission to the network device based on the SRS resource indicator field.

25. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 11, 12 to 22, 23, or 24 through a logic circuit or by executing code instructions.

26. A computer-readable storage medium, wherein the computer-readable storage medium stores a computer program, and when the computer program is run, the method according to any one of claims 1 to 11, 12 to 22, 23, or 24 is implemented.

FIG. 1

FIG. 2

FIG. 3

Frequency

Rear surface: DL

Front surface: UL

Time

FIG. 4

Frequency

One CC

| Downlink subband |
| Uplink subband |
| Downlink subband |

SRS

SRS

Downlink slot          SBFD slot          Uplink slot

Time

FIG. 5

<u>600</u>

```
┌──────────┐                                    ┌──────────┐
│ Terminal │                                    │ Network  │
│  device  │                                    │  device  │
└────┬─────┘                                    └────┬─────┘
     │    ┌──────────────────────────────────┐      │
     │    │ 610: Send configuration information to the │
     │◄───│           terminal device            │
     │    └──────────────────────────────────┘      │
┌───────────────────┐                               │
│ 620: Receive the  │                               │
│ configuration     │                               │
│ information        │                               │
└───────────────────┘                               │
     │    ┌──────────────────────────────────┐      │
     │    │ 630: Send an SRS to the network device │
     │    │ based on the configuration information  │
     │────────────────────────────────────────────►│
     │                        ┌──────────────────────────┐
     │                        │ 640: Receive the SRS from the │
     │                        │ terminal device based on the  │
     │                        │ configuration information     │
     │                        └──────────────────────────┘
```

FIG. 6

Frequency ▲

| A time unit type of a CSI-RS, an SSB, another SRS, and a DL-PRS is an SBFD type | A time unit type of a CSI-RS, an SSB, another SRS, and a DL-PRS is a non-SBFD type | A time unit type of an SRS resource is an SBFD type | A time unit type of an SRS resource is a non-SBFD type |

→ Time

FIG. 7

FIG. 8

900

| Terminal device | | Network device |

910: Send an uplink scheduling grant to the terminal device, where the uplink scheduling grant includes an SRS resource indicator field

920: Receive the uplink scheduling grant

S930: Send uplink transmission to the network device based on the SRS resource indicator field

S940: Receive the uplink transmission from the terminal device based on the SRS resource indicator field

FIG. 9

Frequency ↑

Schedule

| Latest transmission on a resource indicated by an SRI of a scheduling grant in an SBFD type time unit | A time unit type of an SRS is a non-SBFD type | PDCCH: used for carrying a PUSCH scheduling grant | A time unit type of a PUSCH is an SBFD type |

Time

Associated

FIG. 10

Frequency ↑

Schedule

| Latest transmission on a resource indicated by an SRI of a scheduling grant in a non-SBFD type time unit | A time unit type of an SRS is an SBFD type | PDCCH: used for carrying a PUSCH scheduling grant | A time unit type of a PUSCH is a non-SBFD type |

Time

Associated

FIG. 11

1200

Terminal
device

Network
device

1210: Send second indication information
to the terminal device

1220: Receive the second
indication information

1230: Send, to the network device based on
the second indication information, an SRS
corresponding to an SRS resource

1240: Receive, from the terminal
device based on the second
indication information, the SRS
corresponding to the SRS
resource

FIG. 12

1300

1310

Communication
module

FIG. 13

Apparatus 1400

Processor
1410

Transceiver
1430

Memory
1420

FIG. 14

## INTERNATIONAL SEARCH REPORT

| International application No. |
| --- |
| **PCT/CN2024/085926** |

**A. CLASSIFICATION OF SUBJECT MATTER**

H04W 72/23(2023.01)i

According to International Patent Classification (IPC) or to both national classification and IPC

**B. FIELDS SEARCHED**

Minimum documentation searched (classification system followed by classification symbols)

IPC: H04W, H04L, H04B, H04Q 7/-

Documentation searched other than minimum documentation to the extent that such documents are included in the fields searched

Electronic data base consulted during the international search (name of data base and, where practicable, search terms used)

CNABS, CNTXT, CNKI, VEN, WOTXT, USTXT, EPTXT, 3GPP: 探测参考信号, 资源, 集, 子带全双工, 非子带全双工, 上行, 调度授权, 物理上行共享信道, sounding reference signal, SRS, resource, set, subband fullduplex, SBFD, non-SBFD, uplink, UL, scheduling grant, Physical Uplink Shared Channel, PUSCH

**C. DOCUMENTS CONSIDERED TO BE RELEVANT**

| Category* | Citation of document, with indication, where appropriate, of the relevant passages | Relevant to claim No. |
| --- | --- | --- |
| A | WO 2021159493 A1 (HUAWEI TECHNOLOGIES CO., LTD.) 19 August 2021 (2021-08-19) description, paragraphs [0002], [0127]-[0135] and [0246]-[0249] | 1-26 |
| A | CN 109417717 A (BEIJING XIAOMI MOBILE SOFTWARE CO., LTD.) 01 March 2019 (2019-03-01) entire document | 1-26 |
| A | CN 112703753 A (GUANGDONG OPPO MOBILE COMMUNICATIONS CO., LTD.) 23 April 2021 (2021-04-23) entire document | 1-26 |
| A | INTEL CORP. "R1-2300946, On SBFD in NR systems" *3GPP TSG RAN WG1 #112*, 18 February 2023 (2023-02-18), entire document | 1-26 |

☐ Further documents are listed in the continuation of Box C.   ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **16 July 2024** | **16 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/085926**

| Patent document cited in search report | | | Publication date (day/month/year) | Patent family member(s) | | | Publication date (day/month/year) |
|---|---|---|---|---|---|---|---|
| WO | 2021159493 | A1 | 19 August 2021 | US | 2023045308 | A1 | 09 February 2023 |
| | | | | EP | 4090063 | A1 | 16 November 2022 |
| | | | | EP | 4090063 | A4 | 11 January 2023 |
| CN | 109417717 | A | 01 March 2019 | US | 2021336737 | A1 | 28 October 2021 |
| | | | | WO | 2020061953 | A1 | 02 April 2020 |
| CN | 112703753 | A | 23 April 2021 | | None | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310411107